(19) Europäisches Patentamt
European Patent Office
Office européen des brevets

(11) EP 3 483 561 A1

(12) EUROPEAN PATENT APPLICATION

(43) Date of publication:
15.05.2019 Bulletin 2019/20

(51) Int Cl.:
G01D 3/02 (2006.01)   G01D 18/00 (2006.01)
G01C 25/00 (2006.01)   G01P 21/00 (2006.01)

(21) Application number: 18205146.6

(22) Date of filing: 08.11.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.11.2017  JP 2017217039

(71) Applicant: Seiko Epson Corporation
Tokyo 160-8801 (JP)

(72) Inventor: Kobayashi, Yoshihiro
Nagano, 392-8502 (JP)

(74) Representative: Hoffmann Eitle
Patent- und Rechtsanwälte PartmbB
Arabellastraße 30
81925 München (DE)

(54) PROCESSING APPARATUS, PROCESSING SYSTEM, PHYSICAL QUANTITY MEASUREMENT APPARATUS, AND MEASUREMENT METHOD

(57) A processing apparatus (10) includes a processing circuit (30) that performs processing on an output signal (I(t)) of a non-linear system (20) that outputs the output signal including a vibration rectification error or an asymmetry error to the input of the processing circuit, and a storage unit (40) that stores coefficient information (CA, CB) regarding the vibration rectification error or the asymmetry error acquired in advance, in which the processing circuit performs correction for reducing the vibration rectification error or the asymmetry error included in the output signal on the basis of the output signal and the vibration rectification coefficient information (CA) or the asymmetry coefficient information (CB).

FIG. 1

EP 3 483 561 A1

**Description**

<u>BACKGROUND</u>

1. Technical Field

The present invention relates to a processing apparatus, a processing system, a physical quantity measurement apparatus, a measurement method, and the like.

2. Related Art

In devices or systems having good linearity of an output signal with respect to an input, an average of output signals in a case where a sinusoidal vibration is input is set to zero. On the other hand, in devices or systems having non-linearity, the linearity of an output signal with respect to an input is not complete, and thus an average of output signals in a case where a sinusoidal vibration is input is not set to zero. Such an output signal includes a vibration rectification error (VRE) and an asymmetry error.

The vibration rectification error and the asymmetry error are error signals generated by a device or a system having non-linearity, and are not included in an originally input signal. The error signal affects the performance of a processing system or an application system connected to the rear stage of the device or the system. For example, in measurement apparatuses using sensors, the sensors (or detection circuits processing signals detected by the sensors) may have non-linearity, and thus there is a concern that the accuracy of measurement may be deteriorated due to a vibration rectification error and an asymmetry error caused by the non-linearity. For example, since acceleration sensors used for the measurement of environment measure broadband vibration components in a structure vibration environment or a sound vibration environment, low drift (low error) performance is desired for signals having a wide dynamic range.

Related art for reducing a vibration rectification error is disclosed in, for example, JP-T-2008-514959. In JP-T-2008-514959, an acceleration sensor is provided with a restoring force actuator, and a vibration rectification error is reduced by performing feedback control on the restoring force actuator on the basis of a signal detected by the acceleration sensor. In order to minimize the influence of the vibration rectification error, the vibration rectification error is measured by supplying a known vibration signal to the acceleration sensor along a first axis, and a feedback gain setting value is adjusted until the vibration rectification error is set to be less than a first threshold value.

In a case where feedback control is used to correct a vibration rectification error (or an asymmetry error) of a non-linear system, a structure constituting a feedback loop is required, which results in complication of the system.

In addition, there is a concern that the influence of a band of the feedback loop may be exerted. For example, in a case where feedback control is used to correct the vibration rectification error (or the asymmetry error) of the acceleration sensor, it takes time to correct an output, and thus there is a concern that the response of an output to a quick movement (a quick change in acceleration) may be delayed.

<u>SUMMARY</u>

An advantage of some aspects of the invention is to provide a processing apparatus, a processing system, a physical quantity measurement apparatus, a measurement method, and the like which are capable of reducing a vibration rectification error or an asymmetry error due to non-linearity of a non-linear system by the correction of a feedforward.

An aspect of the invention relates to a processing apparatus including a processing circuit that performs processing on an output signal of a non-linear system that outputs the output signal including a vibration rectification error with respect to an input, and a storage unit that stores vibration rectification coefficient information regarding the vibration rectification error acquired in advance, in which the processing circuit performs correction for reducing the vibration rectification error included in the output signal on the basis of the output signal and the vibration rectification coefficient information.

According to the aspect of the invention, correction for reducing the vibration rectification error included in the output signal of the non-linear system on the basis of the output signal of the non-linear system and the vibration rectification coefficient information is performed, and thus it is possible to correct the vibration rectification error by a feedforward without using a feedback structure. It is possible to correct the vibration rectification error with a simpler configuration by performing the correction of the feedforward, and to correct the vibration rectification error over a wider signal band than in a case of correction through feedback control.

In the aspect of the invention, the vibration rectification coefficient information may include constant information regarding a vibration rectification coefficient indicating a constant of the vibration rectification coefficient, and frequency characteristic information regarding the vibration rectification coefficient indicating a frequency characteristic of the vibration rectification coefficient.

In this manner, it is possible to separate correction for the constant and correction for the frequency characteristic. For example, it is possible to realize the correction for the frequency characteristic of the vibration rectification coefficient by performing filtering on the output signal of the non-linear system, and to realize the correction for the constant of the vibration rectification coefficient by multiplying an output of the filtering by the constant. Thereby, it is possible to realize correction processing through light load processing.

In the aspect of the invention, the non-linear system may include a sensor and output a detected signal of the sensor or a signal based on the detected signal as the output signal, and the constant information regarding the vibration rectification coefficient may be information acquired in advance for each sensor.

As described above, the vibration rectification coefficient information includes information regarding a constant and a frequency characteristic, but the constant is different for each sensor. On the other hand, the frequency characteristic is often determined by a frequency characteristic of a detection circuit. From this, a frequency characteristic can be made common. In such a case, a constant may be measured for each sensor, and thus it is possible to simplify the measurement of the vibration rectification coefficient.

In the aspect of the invention, the processing circuit may perform filtering of the frequency characteristic of the vibration rectification coefficient on the output signal, and the frequency characteristic information regarding the vibration rectification coefficient may be coefficient information regarding the filtering for setting the frequency characteristic of the vibration rectification coefficient as a frequency characteristic of the filtering.

In this manner, it is possible to set a frequency characteristic of the filtering on the basis of the frequency characteristic information acquired in advance, and to perform filtering of a frequency characteristic corresponding to a frequency characteristic of the vibration rectification error on the output signal of the non-linear system. It is possible to reduce a load of correction processing by performing correction for the frequency characteristic through the filtering.

In the aspect of the invention, the processing circuit may perform filtering of the frequency characteristic of the vibration rectification coefficient indicated by the frequency characteristic information regarding the vibration rectification coefficient on the output signal, may perform square computation on a signal after the filtering, may obtain a correction value of the vibration rectification error by multiplying a signal after the square computation by a constant of the vibration rectification coefficient indicated by the constant information regarding the vibration rectification coefficient, and may subtract the obtained correction value from the output signal.

In this manner, the filtering of the frequency characteristic indicated by the frequency characteristic information is performed, and square computation is performed on the signal after the filtering, so that a correction intermediate value based on the frequency characteristic of the vibration rectification coefficient is obtained. In addition, a correction value based on the constant of the vibration rectification coefficient is obtained by multiplying the signal after the square computation by the constant indicated by the constant information. The correction value is subtracted from the output signal, so that correction for the constant and the frequency characteristic of the vibration rectification coefficient is realized.

In the aspect of the invention, the vibration rectification coefficient information may be information based on a coefficient of a second-order term in a polynomial expression obtained by performing polynomial approximation on a relationship between an amplitude of the output signal of the non-linear system and a signal in a low frequency bandwidth included in the output signal, when a sinusoidal vibration is input to the non-linear system as the input.

In this manner, it is possible to accurately measure the vibration rectification coefficient by acquiring the relationship between the amplitude of the output signal and the signal in a low frequency bandwidth included in the output signal by changing the amplitude of the sinusoidal vibration and performing polynomial approximation on the relationship. In addition, it is possible to obtain not only a vibration rectification coefficient but also an asymmetry coefficient by using the polynomial approximation.

In the aspect of the invention, the output signal of the non-linear system may include an asymmetry error with respect to the input, the storage unit may store asymmetry coefficient information regarding the asymmetry error acquired in advance, and the processing circuit may perform correction for reducing the asymmetry error included in the output signal on the basis of the asymmetry coefficient information.

In this manner, correction for reducing the asymmetry error included in the output signal of the non-linear system on the basis of the output signal of the non-linear system and the asymmetry coefficient information is performed, and thus it is possible to correct the asymmetry error by a feedforward.

Another aspect of the invention relates to a processing apparatus including a processing circuit that performs processing on an output signal of a non-linear system that outputs the output signal including an asymmetry error with respect to an input, and a storage unit that stores asymmetry coefficient information regarding the asymmetry error acquired in advance, in which the processing circuit performs correction for reducing the asymmetry error included in the output signal on the basis of the output signal and the asymmetry coefficient information.

According to the another aspect of the invention, correction for reducing the asymmetry error included in the output signal of the non-linear system on the basis of the output signal of the non-linear system and the asymmetry coefficient information is performed, and thus it is possible to correct the asymmetry error by a feedforward without using a feedback structure. It is possible to correct the asymmetry error with a simpler configuration by performing the correction of the feedforward, and to correct the asymmetry error over a wider signal band than in a case of correction through feedback control.

In the another aspect of the invention, the asymmetry coefficient information may include constant information regarding an asymmetry coefficient indicating a constant of the asymmetry coefficient, and frequency characteristic information regarding the asymmetry coefficient indicating a frequency characteristic of the asymmetry coefficient.

In this manner, it is possible to separate correction for the constant and correction for the frequency characteristic. For example, it is possible to realize the correction for the frequency characteristic of the asymmetry coefficient by performing filtering on the output signal of the non-linear system, and to realize the correction for the constant of the asymmetry coefficient by multiplying an output of the filtering by the constant. Thereby, it is possible to realize correction processing through light load processing.

In the another aspect of the invention, the non-linear system may include a sensor and output a detected signal of the sensor or a signal based on the detected signal as the output signal, and the constant information regarding the asymmetry coefficient may be information acquired in advance for each sensor.

As described above, the asymmetry coefficient information includes information regarding a constant and a frequency characteristic, but the constant is different for each sensor. On the other hand, the frequency characteristic is often determined by a frequency characteristic of a detection circuit. From this, a frequency characteristic can be made common. In such a case, a constant may be measured for each sensor, and thus it is possible to simplify the measurement of the asymmetry coefficient.

In the another aspect of the invention, the processing circuit may perform filtering of the frequency characteristic of the asymmetry coefficient on the output signal, and the frequency characteristic information regarding the asymmetry coefficient may be coefficient information regarding the filtering for setting the frequency characteristic of the asymmetry coefficient as a frequency characteristic of the filtering.

In this manner, it is possible to set a frequency characteristic of the filtering on the basis of the frequency characteristic information acquired in advance, and to perform filtering of a frequency characteristic corresponding to a frequency characteristic of the asymmetry error on the output signal of the non-linear system. It is possible to reduce a load of correction processing by performing correction for the frequency characteristic through the filtering.

In the another aspect of the invention, the processing circuit may perform filtering of the frequency characteristic of the asymmetry coefficient indicated by the frequency characteristic information regarding the asymmetry coefficient on the output signal, may compute an absolute value on a signal after the filtering, may obtain a correction value of the asymmetry error by multiplying a signal after computing the absolute value by a constant of the asymmetry coefficient indicated by the constant information regarding the asymmetry coefficient, and may subtract the obtained correction value from the output signal.

In this manner, the filtering of the frequency characteristic indicated by the frequency characteristic information is performed, and an absolute value is computed on the signal after the filtering, so that a correction value based on the frequency characteristic of the asymmetry coefficient is obtained. In addition, a correction value based on the constant of the asymmetry coefficient is obtained by multiplying the signal after computing the absolute value by the constant indicated by the constant information. The correction value is subtracted from the output signal, so that correction for the constant and the frequency characteristic of the asymmetry coefficient is realized.

In the another aspect of the invention, the asymmetry coefficient information may be information based on a coefficient of a first-order term in a polynomial expression obtained by performing polynomial approximation on a relationship between an amplitude of the output signal of the non-linear system and a signal in a low frequency bandwidth, when a vibration is input to the non-linear system as the input.

In this manner, it is possible to accurately measure the asymmetry coefficient by acquiring the relationship between the amplitude of the output signal and the signal in a low frequency bandwidth included in the output signal by changing the amplitude of the sinusoidal vibration and performing polynomial approximation on the relationship. In addition, it is possible to obtain an asymmetry coefficient together with a vibration rectification coefficient by using the polynomial approximation.

Still another aspect of the invention relates to a processing system including the processing apparatus described above and the non-linear system.

According to the still another aspect of the invention, there is provided a physical quantity measurement apparatus including the processing apparatus described above, and the non-linear system including a physical quantity transducer.

Still another aspect of the invention relates to a measurement method including inputting vibration to a non-linear system that outputs an output signal including a vibration rectification error with respect to an input, acquiring an amplitude and a signal in a low frequency bandwidth which are included in the output signal of the non-linear system, and acquiring vibration rectification coefficient information on the basis of a coefficient of a second-order term in a polynomial expression obtained by performing polynomial approximation on a relationship between the amplitude and the signal in a low frequency bandwidth.

According to the still another aspect of the invention, there is provided a measurement method including inputting vibration to a non-linear system that outputs an output signal including an asymmetry error with respect to an input, acquiring an amplitude and a signal in a low frequency bandwidth which are included in the output signal of the non-linear system, and acquiring asymmetry coefficient information on the basis of information indicating a coefficient of a first-order term in a polynomial expression obtained by performing polynomial approximation on a relationship between the amplitude and the signal in a low frequency bandwidth.

BRIEF DESCRIPTION OF THE DRAWINGS

The invention will be described with reference to the accompanying drawings, wherein like numbers reference like elements.

Fig. 1 illustrates configuration examples of a processing system and a processing apparatus according to the present exemplary embodiment.
Fig. 2 illustrates a spectrum example of an output signal when a sinusoidal vibration is input to an acceleration sensor.
Fig. 3 illustrates a configuration example of a measurement system that measures a vibration rectification coefficient and the like.
Fig. 4 illustrates a waveform example of an output signal of the acceleration sensor.
Fig. 5 illustrates a spectrum example of a waveform of an output signal of the acceleration sensor.
Fig. 6 illustrates a waveform example of an amplitude of an output signal of the acceleration sensor.
Fig. 7 illustrates a waveform example of a measured signal in a low frequency bandwidth.
Fig. 8 is a diagram illustrating a correlation between an envelope amplitude and a signal in a low frequency bandwidth when a sinusoidal vibration is input to the acceleration sensor.
Fig. 9 is a diagram illustrating a distortion of an input-output relation due to a second-order term in an approximation polynomial.
Fig. 10 is a diagram illustrating a distortion of an input-output relation due to a first-order term in an approximation polynomial.
Fig. 11 is a flowchart illustrating a procedure of processing for measuring a coefficient.
Fig. 12 illustrates a waveform example of an output signal of the acceleration sensor in a case where an amplitude of a vibration waveform to be input to the acceleration sensor is changed in a stepwise manner.
Fig. 13 illustrates an example of a frequency characteristic of a vibration rectification coefficient.
Fig. 14 illustrates an example of a frequency characteristic of a low-pass filter approximating a frequency characteristic of a vibration rectification coefficient and a frequency characteristic of a high-pass filter.
Fig. 15 is a diagram illustrating approximation of a vibration rectification coefficient using two filters.
Fig. 16 is a diagram illustrating results of correction performed using a vibration rectification coefficient approximated by a frequency characteristic of a filter.
Fig. 17 illustrates an example of a frequency characteristic of a vibration rectification coefficient.
Fig. 18 illustrates a first detailed configuration example of a processing system.
Fig. 19 illustrates a second detailed configuration example of the processing system.
Fig. 20 illustrates a first detailed configuration example of a non-linear system.
Fig. 21 illustrates a second detailed configuration example of the non-linear system.
Fig. 22 illustrates a configuration example of a physical quantity measurement apparatus.

DESCRIPTION OF EXEMPLARY EMBODIMENTS

Hereinafter, a preferred embodiment of the invention will be described in detail. Meanwhile, the present embodiment to be described below does not unduly limit the content of the invention described in the appended claims, and not all of the features described in the present embodiment are essential for as solving means of the invention.

1. Processing System and Processing Apparatus

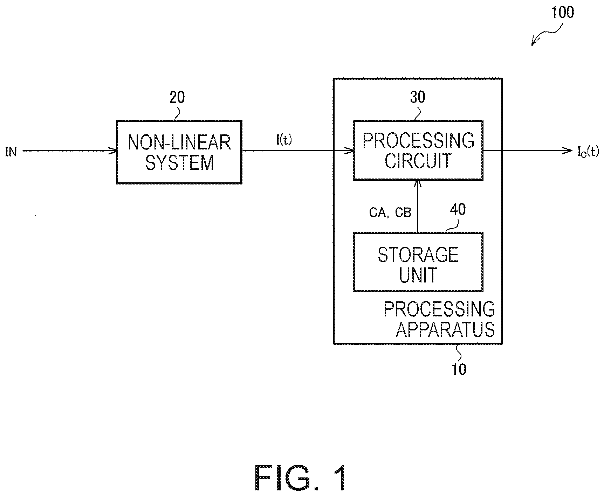

Fig. 1 illustrates configuration examples of a processing system 100 and a processing apparatus 10 according to the present exemplary embodiment. The processing system 100 includes a non-linear system 20 and a processing apparatus 10. Meanwhile, the present exemplary embodiment is not limited to the configuration illustrated in Fig. 1, and various modifications such as the omission of some of components or the addition of other components can be made.

The non-linear system 20 is a system that outputs an output signal I (t) including an output, which is generated with respect to an input IN, and a low frequency component and a harmonic component due to non-linearity of the system. The low frequency component is an offset (a bias, a direct current component) occurring in an output signal due to non-linearity of the system with respect to the input of vibration, or a signal in a low frequency bandwidth. That is, in a linear system, an average of output signals is set to zero in a case where a sine wave input is input to the system. However, in the non-linear system, an average of output signals is not set to zero with respect to the sine wave input, and thus the output signal includes an offset of a vibration rectification error or the like.

Various systems can be assumed as the non-linear system 20. For example, the non-linear system is a physical quantity transducer or a physical quantity measurement apparatus which receives an input of a physical input IN (physical quantity) and outputs a physical quantity measured on the basis of the input IN as an analog or digital output signal I(t). For example, the non-linear system is an acceleration sensor, a gyro sensor (angular velocity sensor), a temperature sensor, a pressure sensor, an optical sensor, a current meter, a flow meter, a voltmeter, an ammeter, a wattmeter, or the like. The acceleration sensor is, for example, a pendulum type or tuning fork vibrator type quartz crystal acceleration sensor, a MEMS acceleration sensor, or the like. The gyro sensor is, for example, a quartz crystal vibrator type gyro sensor, a MEMS vibrator type gyro sensor, or the like. The processing system 100 including such a non-linear system 20 is, for example, a physical quantity measurement system. Alternatively, the non-linear system 20 is a circuit that receives an input of an analog signal (a signal of a voltage or a current) or a digital signal as an input IN and outputs an analog or digital output signal I(t) on the basis of the input IN. For example, the non-linear system is a signal processing circuit including a filter circuit, an amplification circuit, or the like, or a converter (for example, a transformer or the like) that performs any conversion processing on an input signal. Alternatively, the non-linear system is a signal generation circuit in which a frequency and an amplitude are set on the basis of an input IN and which outputs an output signal I(t) having the set frequency and amplitude. The processing system 100 including such a non-linear system 20 is, for example, a signal processing system or a signal generation system. Alternatively, as the non-linear system 20 and the processing system 100 including the non-linear system, a vibration generator and a vibration control system, an alternating current signal generator and an alternating current signal generation control system, an alternating current signal amplifier and an alternating current signal amplification system, a demodulation amplifier and a receiver system, and the like can be assumed.

The processing apparatus 10 is an apparatus that receives an input of an output signal I(t) of the non-linear system 20 and performs processing on the output signal I(t). The processing apparatus 10 may be a general-purpose information processing apparatus such as a Personal Computer (PC), or may be a dedicated processing apparatus (for example, a circuit substrate and a module which are mounted with components, or the like) which performs processing including the correction of a vibration rectification error and the like. The processing apparatus 10 includes a processing circuit 30 and a storage unit 40 (a storage circuit, a storage apparatus).

The processing circuit 30 performs processing on the output signal I(t) of the non-linear system 20. The storage unit 40 stores vibration rectification coefficient information CA of a vibration rectification error acquired in advance. The processing circuit 30 performs correction for reducing the vibration rectification error included in the output signal I (t) on the basis of the output signal I (t) and the vibration rectification coefficient information CA.

The vibration rectification coefficient information CA is information indicating a proportionality coefficient of a vibration rectification error with respect to a square of a vibration amplitude. That is, a vibration rectification coefficient is set so that a product of the square of the vibration amplitude and the vibration rectification coefficient approximates the vibration rectification error. For example, a vibration rectification coefficient (specific to the non-linear system 20) of the non-linear system 20 is measured during the manufacture of the non-linear system 20, the manufacture of the processing system 100, or the like. The vibration rectification coefficient information CA is information indicating the vibration rectification coefficient. The vibration rectification coefficient information CA is information specific to the non-linear system 20, and the vibration rectification coefficient information CA varying depending on the non-linear system 20 connected to the processing apparatus 10 is stored in the storage unit 40. For example, in a case where the non-linear system 20 is a physical quantity sensor, the vibration rectification coefficient information CA is different for each individual physical quantity sensor. As will be described later, the vibration rectification coefficient information CA includes information regarding a constant and a frequency characteristic. For example, both the constant and the frequency characteristic may be information specific to the non-linear system 20, or the constant may be specific to the non-linear system 20 and the frequency characteristic may not be specific (common) to the non-linear system 20.

The storage unit 40 is, for example, a memory (semiconductor memory (ROM, RAM)) or a magnetic disk drive (HDD), an optical disk drive (DVD, CD), or the like. The vibration rectification coefficient information CA may be written in the storage unit 40 in advance, for example, during the manufacture of the processing system 100, or the like. Alternatively, the vibration rectification coefficient information CA may be stored in an external storage unit of the processing apparatus 10, and the vibration rectification coefficient information CA read out from the external storage unit during the operation of the processing apparatus 10 may be primarily stored in the storage unit 40.

The processing circuit 30 obtains a correction value for correcting the vibration rectification error included in the output signal I(t) using the output signal I(t) and the vibration rectification coefficient information CA, and subtracts the correction value from the output signal I(t). That is, in the present exemplary embodiment, the vibration rectification error of the output signal I(t) is corrected using the correction value obtained from the output signal I (t) of the non-linear system 20, which leads to the correction (control) of a feedforward. For example, in a case where digital signal processing is performed on the output signal I(t), the processing circuit 30 is constituted by a processor such as a Central Processing Unit (CPU) or a Digital Signal Processor (DSP). Alternatively, in a case where analog signal processing is performed on the output signal I (t), the processing circuit is constituted by an analog circuit such as a filter circuit or an amplification circuit. In either case of the digital signal processing or the analog signal processing, the processing circuit 30 may be constituted by an Application Specific IC (ASIC).

According to the above-described embodiment, it is possible to correct the vibration rectification error included in the output signal I(t) using a feedforward by performing correction for reducing (suppressing, restraining) the vibration rectification error on the basis of the output signal I (t) and the vibration rectification coefficient information CA. That is, since the product of the square of the vibration amplitude and the vibration rectification coefficient approximates the vibration rectification error, the vibration rectification coefficient information CA of the vibration rectification error acquired in advance is stored in the storage unit 40, so that it is possible to obtain (estimate) and correct the vibration rectification error from the vibration rectification coefficient information CA and the output signal I(t). In a case where correction through feedback control is performed, the influence of a band of a feedback loop is exerted. Accordingly, there is a concern that it may be difficult to perform correction over a wide signal band, but it is possible to correct the vibration rectification error over a wide signal band by performing the correction of the feedforward as in the present exemplary embodiment.

Further, in the present exemplary embodiment, an output signal of the non-linear system 20 includes an asymmetry error with respect to an input. The storage unit 40 stores asymmetry coefficient information CB of an asymmetry error acquired in advance. The processing circuit 30 performs correction for reducing the asymmetry error included in the output signal of the non-linear system 20 on the basis of the asymmetry coefficient information CB.

The asymmetry coefficient information CB is information indicating a proportionality coefficient of an asymmetry error with respect to a vibration amplitude. Specifically, an asymmetry coefficient is set so that a product of an absolute value of the vibration amplitude and the asymmetry coefficient approximates the asymmetry error. For example, an asymmetry coefficient (specific to the non-linear system 20) of the non-linear system 20 is measured during the manufacture of the non-linear system 20, the manufacture of the processing system 100, or the like. The asymmetry coefficient information CB is information indicating the asymmetry coefficient. The asymmetry coefficient information CB is information specific to the non-linear system 20, and the asymmetry coefficient information CB varying depending on the non-linear system 20 connected to the processing apparatus 10 is stored in the storage unit 40. The asymmetry coefficient information CB may be written in the storage unit 40 in advance, for example, during the manufacture of the processing system 100, or the like. Alternatively, the asymmetry coefficient information CB may be stored in an external storage unit of the processing apparatus 10, and the asymmetry coefficient information CB read out from the external storage unit during the manufacture of the processing apparatus 10 may be primarily stored in the storage unit 40.

In this manner, it is possible to correct the asymmetry error included in the output signal I(t) using a feedforward by performing correction for reducing the asymmetry error on the basis of the output signal I (t) and the asymmetry coefficient information CB. That is, since the product of the absolute value of the vibration amplitude and the asymmetry coefficient approximates the asymmetry error, the asymmetry coefficient information CB of the asymmetry error acquired in advance is stored in the storage unit 40, so that it is possible to obtain (estimate) and correct the asymmetry error from the asymmetry coefficient information CB and the output signal I(t). It is possible to correct the asymmetry error over a wide signal band by performing the correction of the feedforward.

2. Vibration Rectification Error, Vibration Rectification Coefficient, and Measurement Method

Hereinafter, details of the present exemplary embodiment will be described. First, a vibration rectification error, a vibration rectification coefficient, and a measurement method thereof will be described. Meanwhile, hereinafter, a case where the non-linear system 20 is an acceleration sensor will be described as an example, but the non-linear system 20 is not limited to the acceleration sensor as described above.

An input to the acceleration sensor (non-linear system) is set to be x, and a signal value (signal level) to be output by the acceleration sensor with respect to the input x is set to be y(x) . The input x is an acceleration of movement which is input to the acceleration sensor. The signal value y(x) is a signal value indicating an acceleration measured by the acceleration sensor. As shown in the following Expression (1), y(x) is approximated by a polynomial expression.

$a_0$, $a_1$, $a_2$,..., and $a_n$ are coefficients of terms of respective orders.

$$y(x) = a_0 + a_1 x^1 + a_2 x^2 + \cdots + a_n x^n \qquad (1)$$

As shown in the following Expression (2), an input x is set to be a sine wave function (vibration waveform) . Here, $\omega$ denotes an angular frequency, t denotes time, and r denotes an amplitude (one-side amplitude) of the sine wave function.

$$x(t) = r \sin(\omega t) \qquad (2)$$

When the above Expression (2) is substituted for the above Expression (1) as x=x(t), y(t) indicating a change in y(x) over time is obtained as shown in the following Expression (3) .

$$y(t) = a_0 + a_1 r \sin(\omega t) + a_2 r^2 \sin^2(\omega t) + \cdots + a_n r^n \sin^n(\omega t) \qquad (3)$$

When the Fourier series of the above Expression (3) is obtained up to the second-order term, the following Expression (4) is given.

$$y(t) = a_0 + \frac{1}{2} a_2 r^2 + a_1 r \sin(\omega t) - \frac{1}{2} a_2 r^2 \cos(2\omega t) \qquad (4)$$

A second term on the right side in the above Expression (4) is a term that does not depend on an input frequency and is proportional to an input amplitude.

As shown in the following Expression (5), a term proportional to a square of the amplitude is a vibration rectification error VRE. Here, $a_2$ denotes a coefficient of the second-order term of the polynomial expression shown in the above Expression (1).

$$VRE = \frac{1}{2} a_2 r^2 \qquad (5)$$

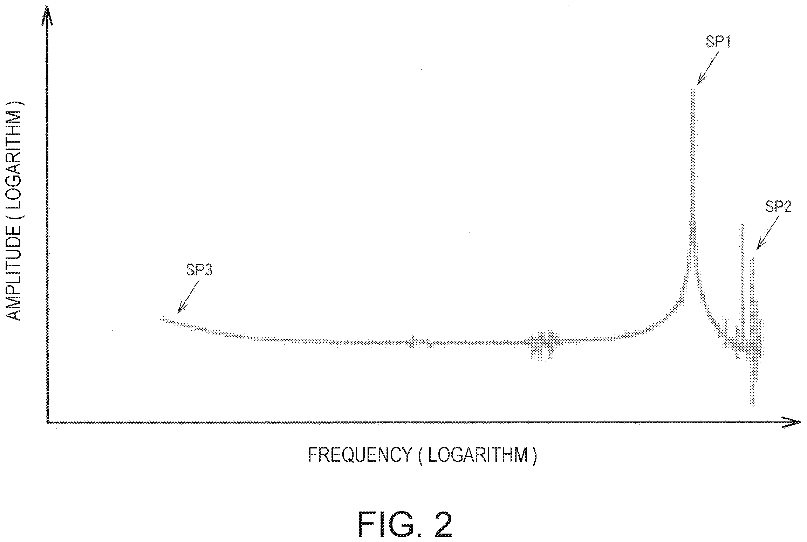

Fig. 2 illustrates a spectrum example of an output signal when a sinusoidal vibration is input to an acceleration sensor. As shown in the above Expression (4), the output signal includes a low frequency bandwidth component, an input frequency component, and a harmonic frequency component. In the spectrum of Fig. 2, a peak shown in SP1 is an input frequency component, a plurality of peaks shown in SP2 are harmonic frequency components, and a protrusion of the spectrum shown in SP3 corresponds to an error of a low frequency bandwidth. The horizontal axis in Fig. 2 represents a logarithm axis of the frequency, and the low frequency bandwidth component shown in SP3 actually represents an error such as VRE due to non-linearity.

In the spectrum of Fig. 2, it is possible to separate a signal in a low frequency bandwidth (that is, a vibration rectification error and the like) by using an appropriate low-pass filter. In addition, the vibration rectification error is proportional to a square of an amplitude r of an input sine wave, and thus it is possible to measure a proportional constant (Vibration Rectification Coefficient: VRC) by the following Expression (6).

$$VRC = \frac{1}{2} a_2 = \frac{VRE}{r^2} \qquad (6)$$

Meanwhile, a case where a signal in a low frequency bandwidth includes a vibration rectification error has been described above, but the signal in a low frequency bandwidth may include not only the vibration rectification error but also an asymmetry error. Hereinafter, a case where a signal in a low frequency bandwidth includes a vibration rectification error and an asymmetry error (hereinafter, a vibration rectification error and the like) and both the errors are corrected will be mainly described.

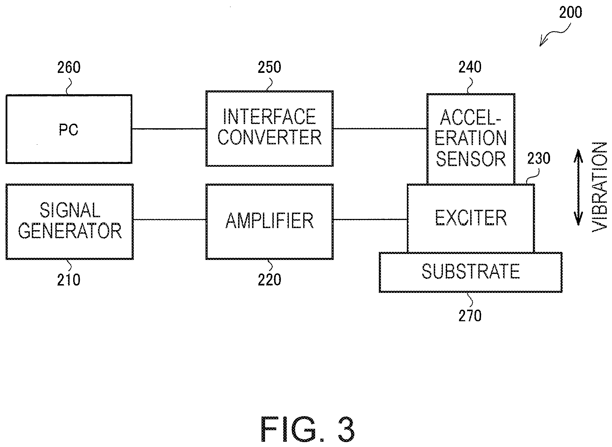

Fig. 3 illustrates a configuration example of a measurement system 200 that measures a vibration rectification coefficient. The measurement system 200 includes a signal generator 210 (signal generation circuit), an amplifier 220, an exciter 230 (vibrator), an acceleration sensor 240 (non-linear system), an interface converter 250 (interface conversion circuit), and a PC 260 (information processing apparatus).

The signal generator 210 generates a sine wave signal. The amplifier 220 amplifies the sine wave signal received from the signal generator 210, and outputs the amplified sine wave signal to the exciter 230 as a driving signal. The exciter 230 is an actuator which is driven in accordance with a driving signal, and is fixed to a substrate 270. The substrate 270 is a stationary plate, a table, or the like which is not vibrated in accordance with a driving signal. The exciter 230 vibrates sinusoidally in accordance with a driving signal which is a sine wave signal. The acceleration sensor 240 is mounted (fixed) on the exciter 230. The vibration direction of the exciter 230 is a detection axis direction of the acceleration sensor 240. The acceleration sensor 240 measures an acceleration of an input vibration, and outputs an output signal indicating the measured acceleration. The interface converter 250 converts the output signal received from the acceleration sensor 240 into an interface-type signal receivable by the PC 260. The PC 260 measures a vibration rectification coefficient and the like on the basis of a signal received from the interface converter 250.

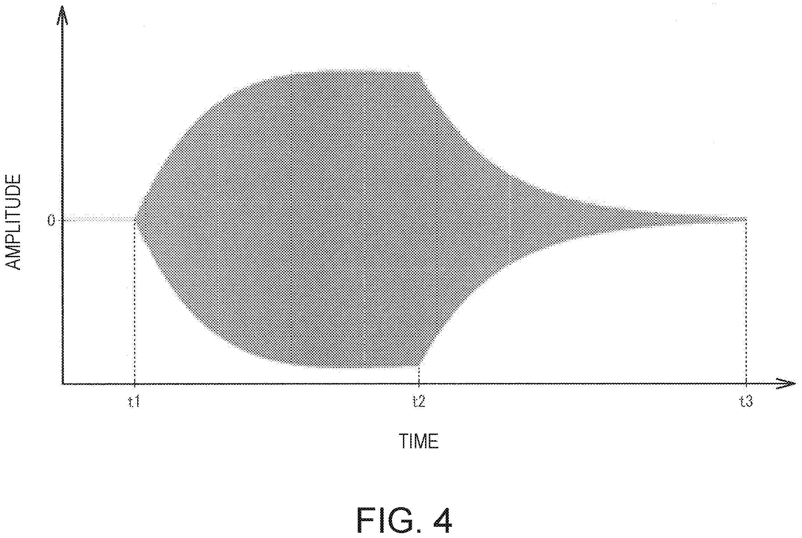

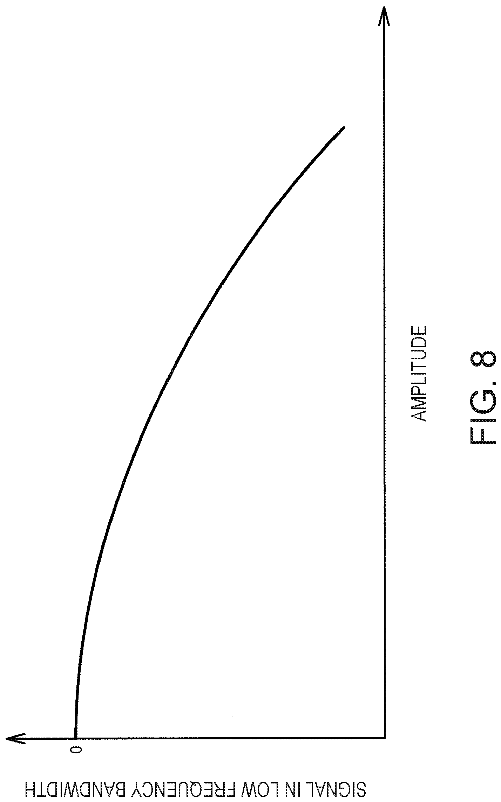

Fig. 4 illustrates a waveform example of an output signal (vibration response) of the acceleration sensor 240. The amplitude of vibration applied to the acceleration sensor 240 by the exciter 230 gradually increases from time t1 to time t2, and gradually decreases from time t2 to time t3. Accordingly, the amplitude of the output signal of the acceleration sensor 240 gradually increases from time t1 to time t2, and gradually decreases from time t2 to time t3. In this manner, it is possible to obtain a relationship (function) between a vibration amplitude and a vibration rectification error or the like as will be described in Fig. 8 by changing an amplitude.

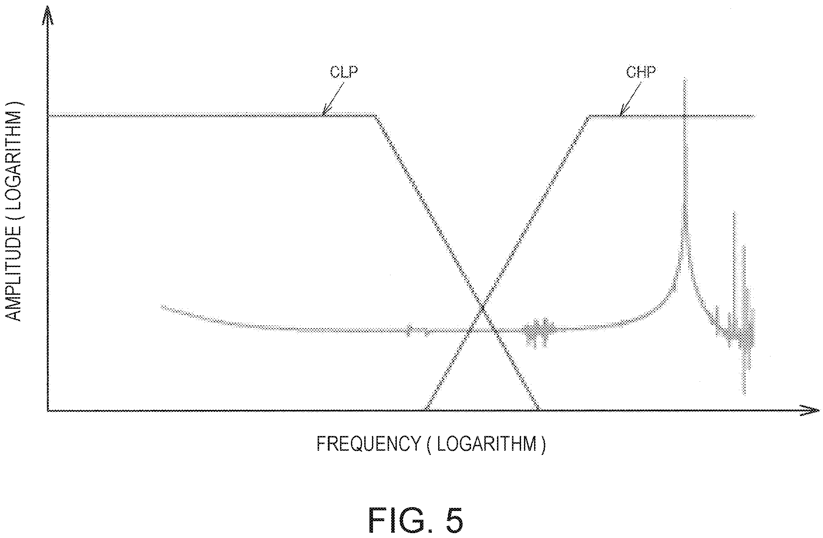

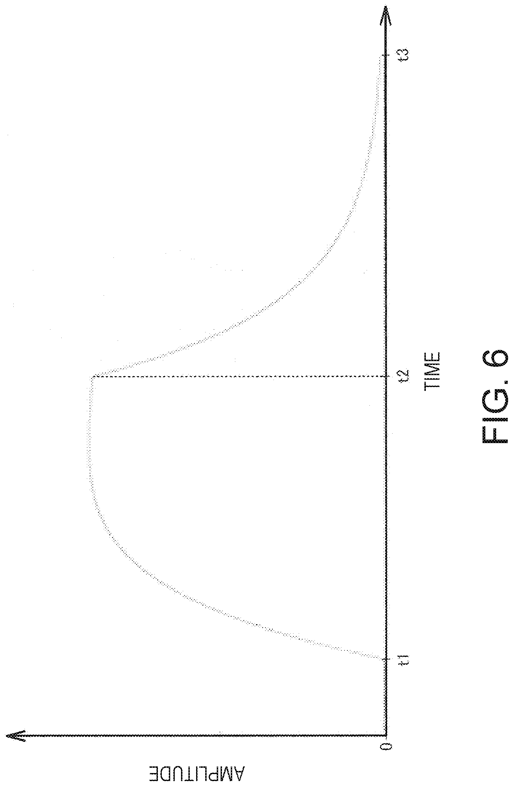

Fig. 5 illustrates a spectrum example of a waveform of the output signal (vibration response) of Fig. 4. The PC 260 performs high-pass filtering of a frequency characteristic shown in CHP of Fig. 5 on the output signal of the acceleration sensor 240 to extract a response of a high-frequency bandwidth. In addition, low-pass filtering is performed on an absolute value of the extracted response waveform of the high-frequency bandwidth, and multiplies the signal by a peak-to-rms ratio ($\pi$/2) to obtain an amplitude (a signal level of an envelope) of a vibration response. Fig. 6 illustrates a waveform example of an amplitude of the output signal (vibration response) of the acceleration sensor 240. Meanwhile, low-pass filtering may be performed on an absolute value of the output signal of the acceleration sensor 240 excluding a bias error without using a high-pass filter, and the signal may be multiplied by a peak-to-rms ratio to obtain an amplitude of a vibration response.

In addition, the PC 260 performs low-pass filtering of a frequency characteristic shown in CLP of Fig. 5 on a vibration amplitude output signal of the acceleration sensor 240 to extract a response of a low frequency bandwidth.

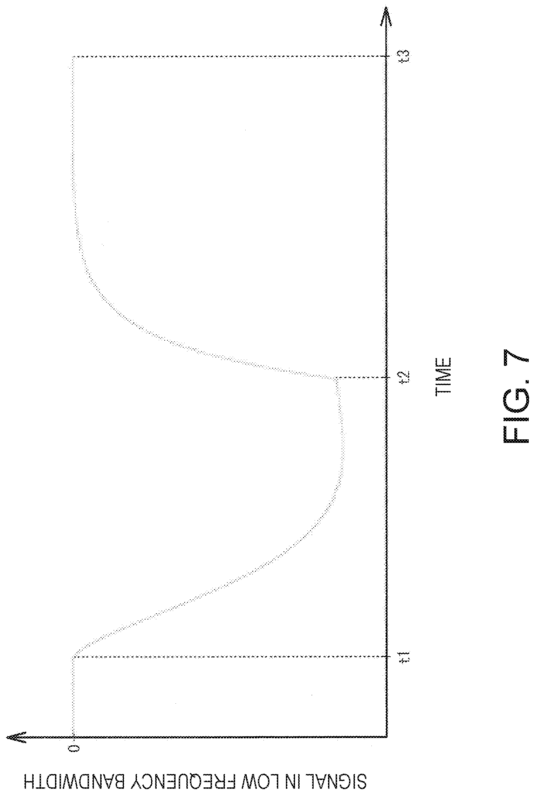

The response of the low frequency bandwidth corresponds to the vibration rectification error and the asymmetry error included in the vibration response illustrated in Fig. 4. Fig. 7 illustrates a waveform example of the measured vibration rectification error and the like.

Meanwhile, a low-pass filter for obtaining an envelope amplitude and a low-pass filter for obtaining a vibration rectification error and the like may be filters having the same characteristic. A cut-off frequency of the low-pass filter used at this time is set to be equal to or greater than a frequency range of a fluctuation in an envelope of an output waveform when a sinusoidal vibration is input. That is, a passing frequency bandwidth of the low-pass filter is set to be equal to or greater than a frequency bandwidth range of a fluctuation in an envelope of an output waveform when a sinusoidal vibration is input. In addition, the cut-off frequency of the low-pass filter is set to be equal to or less than a driving signal frequency so as to block a frequency equal to or higher than a driving signal.

Fig. 8 is a diagram illustrating a correlation between an envelope amplitude and a signal in a low frequency bandwidth (a vibration rectification error and the like) when a sinusoidal vibration is input to the acceleration sensor. That is, the amplitude in Fig. 6 is plotted on the horizontal axis, and the signal in a low frequency bandwidth (vibration rectification error and the like) in Fig. 7 (at the same time) corresponding to the amplitude is plotted on the vertical axis . This relationship in Fig. 8 is approximated by a second-order polynomial expression shown in the following Expression (7). A, B, and C are coefficients of the respective terms in the second-order polynomial expression. Here, d(r) denotes a drift quantity in a low frequency bandwidth in an amplitude r. The drift quantity is a total amount of errors occurring due to the non-linearity of the acceleration sensor 240.

$$d(r) = Ar^2 + Br + C \qquad (7)$$

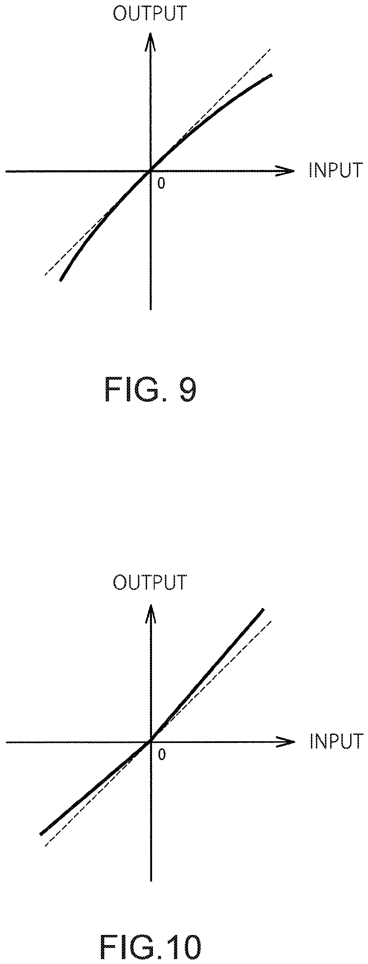

The second-order term in the above Expression (7) corresponds to a vibration rectification error, and the coefficient (A) corresponds to a vibration rectification coefficient VRC as shown in the following Expression (8) . Fig. 9 is a diagram illustrating a distortion of an input-output relation due to the second-order term in the above Expression (7) . The horizontal axis represents an input to the acceleration sensor, and the vertical axis represents an output of the acceleration sensor. A dotted line indicates an input-output relation in a case of linearity. As illustrated in Fig. 9, a vibration rectification error occurs in a case where an output includes a second-order term of an input. The positive and negative of the vibration rectification coefficient varies depending on whether the second-order term is convex upward or downward.

$$VRC = \frac{1}{2}a_2 = \frac{VRE}{r^2} = \frac{1}{2}A \qquad (8)$$

The first-order term in the above Expression (7) corresponds to an asymmetry error, and the coefficient (B) corresponds to an asymmetry coefficient. Fig. 10 is a diagram illustrating a distortion of an input-output relation due to the first-order term in the above Expression (7). As shown in Fig. 10, in a case where an inclination of an output with respect to a positive input and an inclination of an output with respect to a negative input are different from each other, an asymmetry error occurs.

The 0th-order term (constant term) in the above Expression (7) corresponds to an offset. An offset occurs in a case where an output is not set to zero when an input is zero (that is, a straight line indicated by the dotted line in Fig. 9 or 10 is moved in parallel in the vertical axis direction).

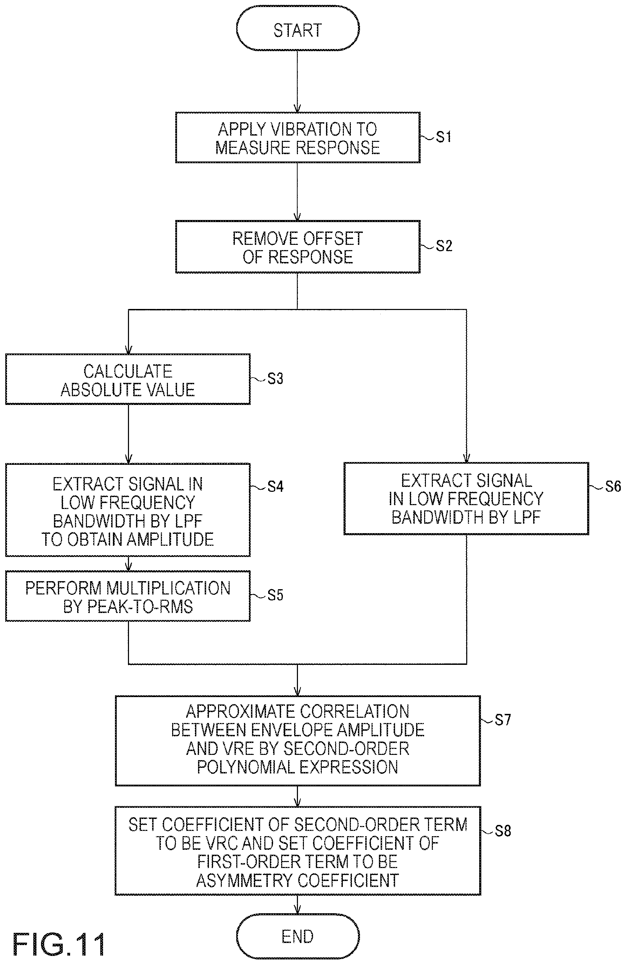

Fig. 11 is a flowchart illustrating a procedure of processing for measuring a coefficient. When the processing is started, the exciter 230 applies vibration to the acceleration sensor 240, and the PC 260 measures a response (step S1). That is, an output signal of the acceleration sensor 240 is acquired. Next, the PC 260 removes an offset of the response (step S2). That is, a DC component is removed from the output signal of the acceleration sensor 240 to extract an AC component. Hereinafter, this signal is referred to as an AC component signal. Alternatively, an output of the acceleration sensor immediately before the application of a driving signal is subtracted as a bias offset to extract an AC component.

Next, the PC 260 calculates an absolute value of the AC component signal (step S3). Next, the PC 260 performs low-pass filtering on the absolute value to acquire a signal in a low frequency bandwidth as an amplitude of the response (step S4). Next, the amplitude of the response is multiplied by a peak-to-rms ratio to acquire an envelope amplitude of the response (step S5). Steps S3 to S5 correspond to the above-descried processing for acquiring an amplitude in Fig. 6. In addition, the PC 260 performs low-pass filtering on an AC component signal to acquire a signal in a low frequency bandwidth (step S6). Step S6 corresponds to the above-described processing for acquiring a signal in a low frequency bandwidth in Fig. 7.

Next, a correlation between the envelope amplitude and the signal in the low frequency bandwidth is approximated by a second-order polynomial expression (step S7). Next, a vibration rectification coefficient (VRC) is obtained from a coefficient of the second-order term in the second-order polynomial expression obtained by the approximation, and a coefficient of the first-order term is set to be an asymmetry coefficient (step S8). Steps S7 and S8 correspond to the processing for obtaining a vibration rectification coefficient and an asymmetry coefficient described in Fig. 8.

In the application of vibration, a known vibration frequency is applied to the acceleration sensor 240 with a known vibration amplitude. That is, vibration to be applied to the acceleration sensor 240 is not random vibration. At least one or more amplitudes of the known vibration to be applied to the acceleration sensor 240 are set, and at least one or more frequencies of the known vibration are set. For example, in the example of Fig. 4, vibration having a fixed frequency is applied to the acceleration sensor 240 while temporally changing an amplitude. The same measurement as above is performed at a plurality of frequencies to obtain a vibration rectification coefficient and an asymmetry coefficient for each frequency.

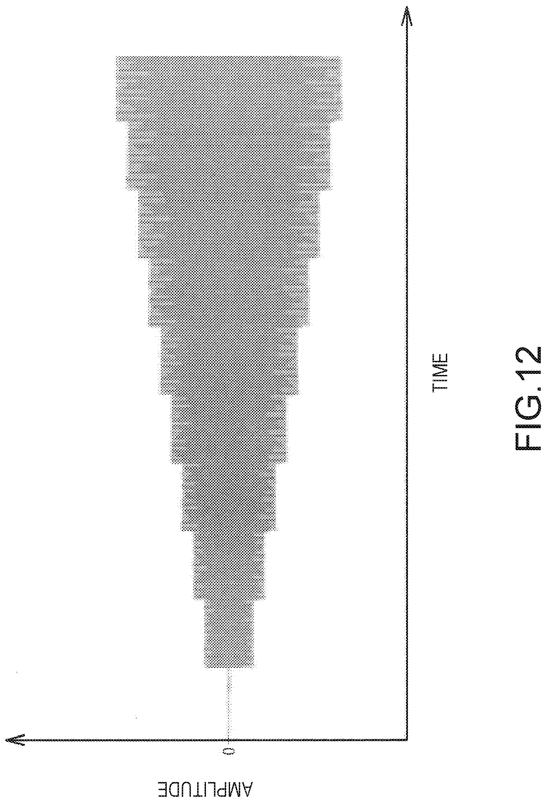

Meanwhile, as illustrated in Fig. 12, an amplitude of a vibration waveform to be input to the acceleration sensor 240 may be changed in a stepwise manner. Low-pass filtering is performed on the output signal of the acceleration sensor 240 to acquire a signal in a low frequency bandwidth, so that a drift quantity in each step of an amplitude is obtained. In addition, an output signal of the acceleration sensor immediately before the application of vibration is subtracted as a bias offset and is then subjected to low-pass filtering to acquire a signal in a low frequency bandwidth, so that a drift quantity in each step of an amplitude is obtained. This is plotted in the same method as in Fig. 8 and a relationship between the amplitude and the drift quantity is approximated by a second-order polynomial expression, so that a vibration rectification coefficient and an asymmetry coefficient are obtained.

According to the above-described exemplary embodiment, vibration rectification coefficient information is acquired by the following measurement method. That is, vibration is input to the non-linear system 20 that outputs an output signal including a vibration rectification error with respect to an input, an amplitude and a signal in a low frequency bandwidth which are included in the output signal of the non-linear system 20 are acquired, and the vibration rectification coefficient information is acquired on the basis of a coefficient of a second-order term in a polynomial expression obtained by performing polynomial approximation on a relationship between the amplitude and the signal in the low frequency bandwidth.

In addition, vibration is input to the non-linear system that outputs an output signal including an asymmetry error with respect to an input, an amplitude and a signal in a low frequency bandwidth which are included in the output signal of the non-linear system are acquired, and asymmetry coefficient information is acquired on the basis of information indicating a coefficient of a first-order term in a polynomial expression obtained by performing polynomial approximation on a relationship between the amplitude and the signal in the low frequency bandwidth.

By using such a measurement method, it is possible to acquire a relationship between an amplitude and a signal in a low frequency bandwidth and to measure a vibration rectification coefficient on the basis of a coefficient of a second-order term in a polynomial expression obtained by performing polynomial approximation on the relationship. In addition, it is possible to measure an asymmetry coefficient on the basis of a coefficient of a first-order term in the polynomial expression. As will be described later, it is possible to accurately measure a vibration rectification coefficient and an asymmetry error by using the polynomial approximation. In addition, it is possible to measure the asymmetry error together with a vibration rectification error by using the polynomial approximation.

Meanwhile, a frequency characteristic of the vibration rectification coefficient may be measured as follows. That is, vibration having a known amplitude is input to the acceleration sensor 240, and the frequency of the vibration is swept from a known first frequency to a known second frequency.

As shown in the following Expression (9), an absolute value of an output signal (vibration response) from which the bias of the acceleration sensor with respect to a frequency-swept driving signal is multiplied by a peak-to-rms ratio to obtain an output amplitude $r_C$ having been subjected to low-pass filtering. Here, $r(f_C)\sin(2\pi f_C)$ is an output signal of the acceleration sensor, and $\pi/2$ is a peak-to-rms ratio. In addition, $H_{LP}(s)$ is a transfer function of a low-pass filter.

$$r_C = H_{LP}(s)\frac{\pi}{2}\left|r(f_C)\sin(2\pi f_C)\right| \qquad (9)$$

A vibration rectification coefficient $VRC(f_C)$ at a frequency $f_C$ is obtained by the following Expression (10). $VRE(f_C)$ is a signal in a low frequency bandwidth at the frequency $f_C$. In addition, $r_C(f_C)$ is an amplitude at the frequency $f_C$. $VRE(f_C)$ is a signal in a low frequency bandwidth which is obtained by performing low-pass filtering on the output signal of the acceleration sensor 240 at the frequency $f_C$.

$$VRC(f_C) = \frac{VRE(f_C)}{r_C(f_C)^2},$$

$$VRE(f_C) = H_{LP}(s)r(f_C)\sin(2\pi f_C) \qquad (10)$$

3. Correction Method

A method of correcting an output signal of the acceleration sensor 240 (non-linear system) using the vibration rectification coefficient and the asymmetry coefficient obtained by the above-described measurement method will be described.

A drift quantity d (I(t)) in a low frequency bandwidth is expressed as the following Expression (11) by assuming a signal value of an output signal of the acceleration sensor 240, which is a vibration response, to be I(t).

$$d(I(t)) = AI(t)^2 + B|I(t)| + C \qquad (11)$$

As shown in the following Expressions (12) and (13), it is possible to suppress a non-linear error (a vibration rectification error and an asymmetry) by subtracting the drift quantity d(I(t)) expressed by the above Expression (11) from the vibration response I(t). $I_C(t)$ is a vibration response after correction (a signal value of an output signal of the acceleration sensor 240 after correction).

$$I_C(t) = I(t) - 2d(I(t)) \qquad (12)$$

$$I_C(t) = I(t) - 2\left(A \times I(t)^2 + B \times |I(t)|\right) \qquad (13)$$

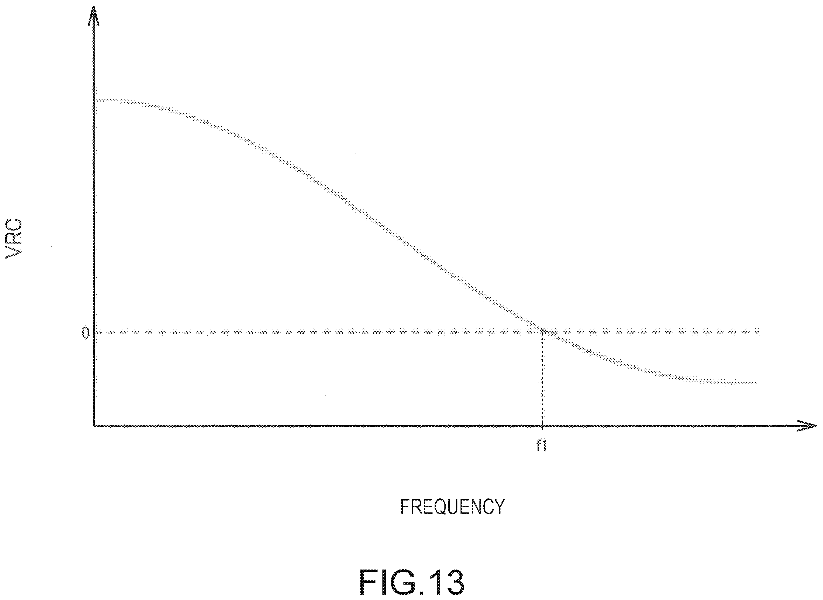

The vibration rectification coefficient and the asymmetry coefficient change depending on the frequency of the vibration input to the acceleration sensor 240, and have a frequency characteristic. Fig. 13 illustrates an example of a frequency characteristic of a vibration rectification coefficient.

A drift quantity in a low frequency bandwidth caused by a vibration amplitude at any input vibration frequency is assumed to be d(I(t),s). In addition, a frequency characteristic of a vibration rectification coefficient is assumed to be A(s), and a frequency characteristic of an asymmetry coefficient is assumed to be B(s). In this case, the drift quantity d(I(t),s) is expressed by the following Expression (14).

$$d\left(I(t),s\right) = A(s) \times I(t)^2 + B(s) \times |I(t)| + C \qquad (14)$$

Consideration will be performed by dividing a frequency characteristic A(s) of a vibration rectification coefficient into a constant A and a frequency characteristic $H_2^2(s)$ and dividing a frequency characteristic B(s) of an asymmetry coefficient into a constant B and a frequency characteristic $H_1(s)$. That is, the frequency characteristic of the vibration rectification coefficient is assumed to be $A(s) = A \times H_2^2(s)$, and the frequency characteristic of the asymmetry coefficient is assumed to be $B(s) = B \times H_1(s)$. Thereby, it is possible to transform the above Expression (14) into the following Expression (15). That is, it is possible to approximate a frequency characteristic of each coefficient by filtering a vibration response I(t) using a filter approximating the frequency characteristics $H_2(s)$ and $H_1(s)$. In addition, it is possible to approximate each coefficient including a constant and a frequency characteristic by multiplying the constants A and B.

$$\begin{aligned} d\left(I(t),s\right) &= A \times H_2^{\ 2}(s) \times I(t)^2 + B \times H_1(s) \times |I(t)| + C \\ &= A \times \left(H_2(s) \times I(t)\right)^2 + B \times |H_1(s) \times I(t)| + C \end{aligned} \qquad (15)$$

Based on the above Expression (15), the vibration response $I_C(t)$ after correction is expressed by the following Expression (16).

$$I_C(t) = I(t) - 2\left(A \times \left(H_2(s) \times I(t)\right)^2 + B \times |H_1(s) \times I(t)|\right) \qquad (16)$$

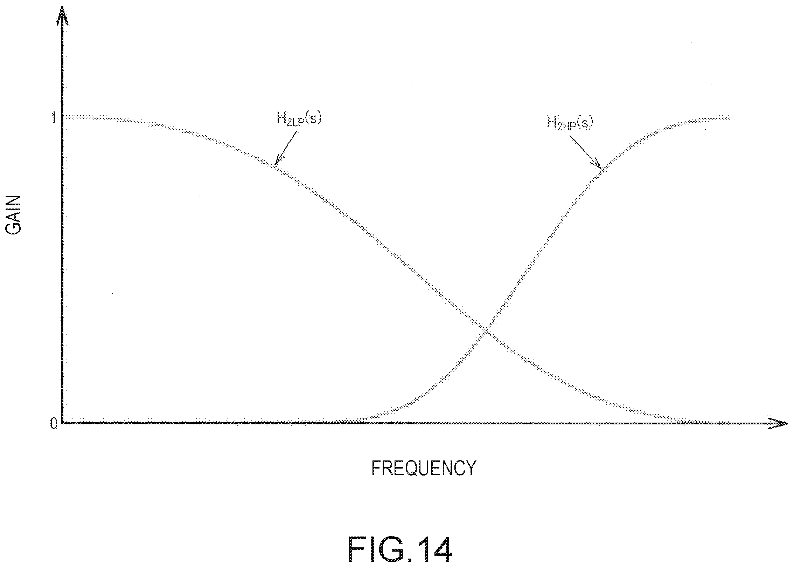

In the example of Fig. 13, it is possible to approximate a frequency characteristic of a vibration rectification coefficient by approximating a low frequency bandwidth side from a frequency f1 at which the vibration rectification coefficient is set to 0 by a low-pass filter and approximating a high-frequency bandwidth from the frequency f1 by a high-pass filter. Fig. 14 illustrates an example of a frequency characteristic $H_{2LP}(S)$ of the low-pass filter and a frequency characteristic $H_{2HP}(S)$ of the high-pass filter.

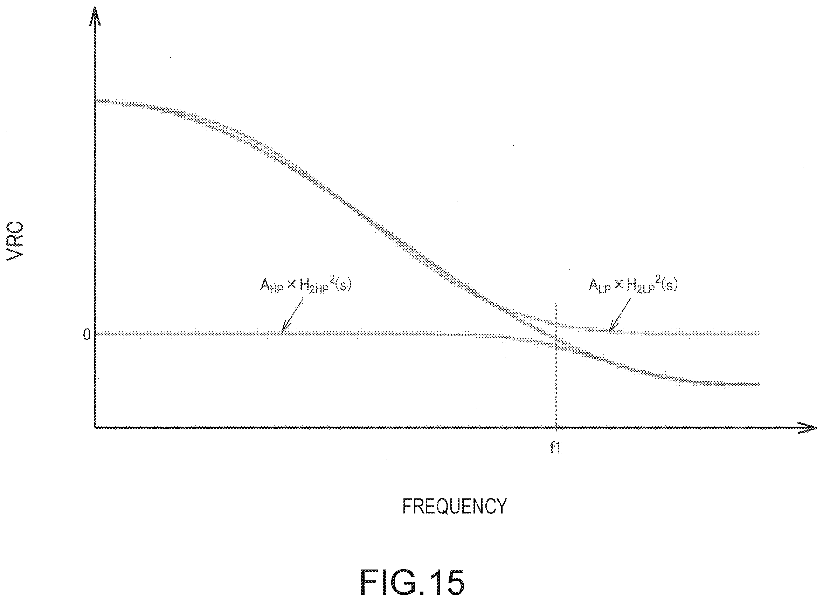

It is possible to approximate a vibration rectification coefficient as in the following Expression (17) by a combination of the two filters. Fig. 15 is a diagram illustrating approximation of a vibration rectification coefficient using two filters. The polarity of a frequency characteristic of a vibration rectification coefficient (that is, the sign of the vibration rectification coefficient) represents the fluctuation polarity (the sign in a fluctuation direction) of a vibration rectification error. The polarity of a high-pass filter approximating a frequency bandwidth in which a vibration rectification coefficient is negative is determined by the sign of the vibration rectification coefficient in this band.

$$A(s) = A \times H_2^{\ 2}(s) = A_{LP} \times H_{2LP}^{\ \ 2}(s) + A_{HP} \times H_{2HP}^{\ \ 2}(s) \qquad (17)$$

A cut-off frequency of a low-pass filter and a cut-off frequency of a high-pass filter are set so as to approximate a frequency characteristic of a vibration rectification coefficient when performing fitting as illustrated in Fig. 15. That is, a filter gain obtained by the approximation of each of separate bands depending on the shape of a frequency characteristic of coefficient information serves as coefficient information of each of the filters. In an example, a gain of a pass filter

$H_{2HP}(s)^2$ approximating a frequency characteristic A(s) of a vibration rectification coefficient is $A_{HP}$. It is desirable that the band division based on a filter characteristic is performed centering on a frequency f1 at which a frequency characteristic of a vibration rectification coefficient is set to 0. For example, the cut-off frequency of the low-pass filter is equal to or lower than f1, and the cut-off frequency of the high-pass filter is equal to or higher than f1.

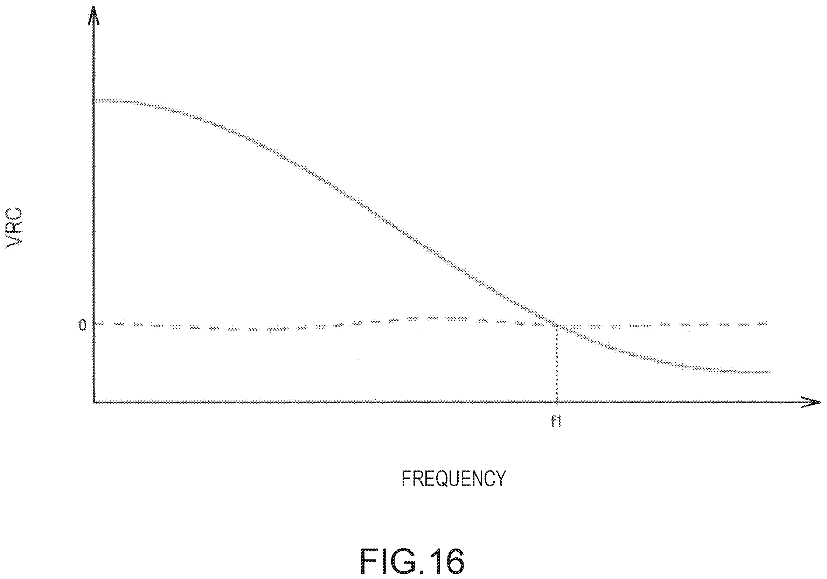

Fig. 16 is a diagram illustrating results of correction performed using a vibration rectification coefficient approximated by a frequency characteristic of a filter. A solid line indicates a measured vibration rectification coefficient, and a dotted line indicates a difference between the measured vibration rectification coefficient and a vibration rectification coefficient approximated by a frequency characteristic of a filter.

A vibration response $I_C(t)$ obtained by correcting a vibration rectification error using the approximated vibration rectification coefficient is expressed by the following Expression (18).

$$I_C(t) = I(t) - 2 \times A \times \left(H_2(s) \times I(t)\right)^2$$
$$= I(t) - 2 \times \left\{ A_{LP} \times \left(H_{2LP}(s) \times I(t)\right)^2 + A_{HP} \times \left(H_{2HP}(s) \times I(t)\right)^2 \right\} \qquad (18)$$

In the present exemplary embodiment, constants $A_{LP}$ and $A_{HP}$ and frequency characteristics $H_{2LP}(s)$ and $H_{2HP}(s)$ of respective frequency bandwidths separated by a filter are measured in advance, the information thereof is read out from the storage unit 40 storing the information, and the processing circuit 30 computes the above Expression (18), thereby correcting a vibration rectification error. Meanwhile, correction for subtracting a vibration rectification error and an asymmetry error from the vibration response I(t) as shown in the above Expression (16) may be performed, or correction for subtracting only the vibration rectification error from the vibration response I(t) as shown in the above Expression (18) may be performed. For example, in a case where the asymmetry error is sufficiently smaller than the vibration rectification error, only the vibration rectification error may be corrected.

Also regarding a frequency characteristic $H_1(s)$ of an asymmetry coefficient, approximation is performed by a frequency characteristic of a filter using the same method as that of a vibration rectification coefficient. Meanwhile, a frequency characteristic of the asymmetry coefficient may be regarded as being the same as a frequency characteristic of the vibration rectification coefficient. In this case, the measurement of the frequency characteristic of the asymmetry coefficient may be omitted. The constant B and the frequency characteristic $H_1(s)$ of the asymmetry coefficient are measured in advance, the information thereof is read out from the storage unit 40 storing the information, and the processing circuit 30 computes the above Expression (16), thereby correcting the asymmetry coefficient (and the vibration rectification error) . Meanwhile, as shown in the following Expression (19), correction for subtracting only the asymmetry error from the vibration response I(t) may be performed. For example, in a case where the vibration rectification error is sufficiently smaller than the asymmetry error, such correction may be performed.

$$I_C(t) = I(t) - 2 \times B \times \left| H_1(s) \times I(t) \right| \qquad (19)$$

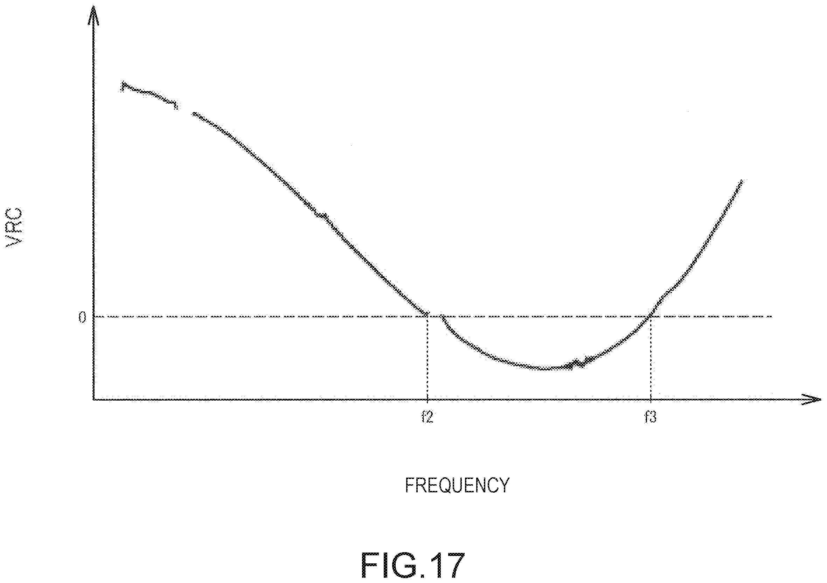

Fig. 17 illustrates an example of a frequency characteristic of a vibration rectification coefficient. In the example of Fig. 17, a vibration rectification coefficient is set to 0 at frequencies f2 and f3. In such a case, as shown in the following Expression (20), frequency characteristics at the frequency f2 or lower are approximated by a low-pass filter, frequency characteristics at the frequencies f2 to f3 are approximated by a bandpass filter, and frequency characteristics at the frequency f3 or higher are approximated by a high-pass filter.

$$A \times H_2^{\,2}(s) = A_{LP} \times H_{2LP}^{\,2}(s) + A_{BP} \times H_{2BP}^{\,2}(s) + A_{HP} \times H_{2HP}^{\,2}(s) \qquad (20)$$

Meanwhile, as shown in the following Expression (21), it is possible to trace a frequency characteristic of any vibration rectification coefficient by the sum of products of a plurality of filters and a vibration rectification coefficient corresponding to a filter band. Here, k is an integer of 1 or greater, and is a number indicating each frequency bandwidth.

$$A \times H_2^{\,2}(s) = \sum_{1}^{k} A_k \times H_{2k}^{\,2}(s) \qquad (21)$$

According to the above-described exemplary embodiment, vibration rectification coefficient information includes constant information regarding a vibration rectification coefficient indicating a constant A of a vibration rectification coefficient and frequency characteristic information regarding a vibration rectification coefficient indicating a frequency characteristic $H_2(s)$ of the vibration rectification coefficient. For example, the frequency characteristic information is a filter coefficient for realizing the frequency characteristic $H_2(s)$ in digital signal processing, and is a parameter (for example, a resistance value of resistance included in a filter, or a setting value for setting a capacitance value of a capacitor) for variably controlling a frequency characteristic of the filter in analog signal processing.

In this manner, it is possible to separate correction for the constant A and correction for the frequency characteristic $H_2(s)$ from each other. Specifically, as described in the above Expressions (15) and (16), it is possible to perform correction for a frequency characteristic of a vibration rectification coefficient by performing the filtering of the frequency characteristic $H_2(s)$ on an output signal of the non-linear system 20, and to perform correction for a constant of the vibration rectification coefficient by multiplying an output of the filtering by the constant A. Thereby, it is possible to reduce a load of the correction processing. For example, when there is attempt to perform computation for multiplying a component of each frequency by a coefficient at the frequency, Fourier transform is performed on the output signal of the non-linear system 20, a component of each frequency is multiplied by a coefficient, and inverse Fourier transform is performed on a result of the multiplication. In such a method in which a constant and a frequency characteristic are not separated from each other, it is necessary to perform Fourier transform at high speed, and thus a processing load is large. In the present exemplary embodiment, correction for a frequency characteristic is realized in filtering, and thus it is possible to reduce a processing load.

Further, in the present exemplary embodiment, the non-linear system 20 includes a sensor and outputs a detected signal of the sensor or a signal based on the detected signal as an output signal. Constant information regarding the vibration rectification coefficient information CA is information which is acquired in advance for each sensor. For example, the sensor is a physical quantity transducer (physical quantity detection element) that converts a physical quantity into an electrical signal. For example, the sensor is a detection element (for example, a quartz crystal vibrator, a MEMS vibrator, or the like) of an acceleration sensor. The non-linear system 20 may output the detected signal of the sensor as an output signal as it is, or may perform signal processing on the detected signal and then output the processed signal. For example, a detection circuit (a detection circuit such as an acceleration sensor or a gyro sensor) of the physical quantity transducer extracts a physical quantity from a detected signal of the physical quantity transducer, and outputs a signal indicating the physical quantity as an output signal.

As described above, the vibration rectification coefficient information CA includes information regarding the constant A and the frequency characteristic $H_2(s)$, but the constant A is different from each sensor (for example, for each individual sensor). On the other hand, the frequency characteristic $H_2(s)$ is almost determined by a frequency characteristic of a detection circuit, and the frequency characteristic $H_2(s)$ may be made common when detection circuits are the same. From this, the constant information regarding the vibration rectification coefficient information CA may be stored as information which is acquired in advance for each sensor. The frequency characteristic $H_2(s)$ may be information acquired in advance for each sensor, or may be made common regardless of the sensors. In a case where a frequency characteristic is made common, the frequency characteristic may be measured once, and only a constant may be measured by each sensor, so that it is possible to simplify the measurement of a vibration rectification coefficient.

Further, in the present exemplary embodiment, the processing circuit 30 performs filtering of the frequency characteristic $H_2(s)$ of the vibration rectification coefficient on an output signal of the non-linear system 20. Frequency characteristic information regarding the vibration rectification coefficient is coefficient information regarding filtering for setting the frequency characteristic $H_2(s)$ of the vibration rectification coefficient as a frequency characteristic of filtering.

In this manner, it is possible to set a frequency characteristic of filtering on the basis of frequency characteristic information acquired in advance and to perform filtering having a frequency characteristic corresponding to a frequency characteristic $H_2(s)$ of a vibration rectification error on an output signal of the non-linear system 20. As described above, correction for the frequency characteristic is performed through the filtering, and thus it is possible to reduce a load of the correction processing.

Further, in the present exemplary embodiment, the processing circuit 30 performs filtering of a frequency characteristic $H_2(s)$ of a vibration rectification coefficient indicated by frequency characteristic information regarding the vibration rectification coefficient on an output signal of the non-linear system 20, performs square computation on the signal after the filtering, obtains a correction value of a vibration rectification error by multiplying the signal after the square computation by a constant A of the vibration rectification coefficient indicated by constant information regarding the vibration rectification coefficient, and subtracts the obtained correction value from the output signal. Meanwhile, a value obtained by reversing the sign of the correction value may be obtained, and the value may be added to the output signal. That is, such addition is also included in "subtraction of the correction value from the output signal".

By such computation, the correction computation as shown in the above Expression (18) is realized. That is, a vibration rectification error is calculated using the sum of values obtained by multiplying values of squares of one or more filter characteristics approximated to a frequency characteristic of a vibration rectification error coefficient, a coefficient in a filter frequency bandwidth, and the value of a square of the output signal by the output signal of the non-linear system 20, and the calculated vibration rectification error is subtracted from the output signal to realize correction.

Further, in the present exemplary embodiment, as described above with reference to Fig. 8, when a sinusoidal vibration is input to the non-linear system 20 as an input, a coefficient of each term in a polynomial expression (the above Expression (7)) is obtained by performing polynomial approximation on a relationship between an amplitude of an output signal of the non-linear system 20 and a signal in a low frequency bandwidth included in the output signal. Vibration rectification coefficient information CA is information (the above Expression (8)) based on a coefficient (A) of a second-order term in the polynomial expression. The information based on the coefficient of the second-order term is, specifically, constant information (for example, $A_{LP}$ and $A_{HP}$ in the above Expression (17)) and frequency characteristic information (for example, $H_{2LP}(s)$ and $H_{2HP}(s)$ in the above Expression (17)) regarding a vibration rectification coefficient.

In this manner, it is possible to accurately measure a vibration rectification coefficient by acquiring a relationship between an amplitude and a signal in a low frequency bandwidth while changing the amplitude, and performing polynomial approximation on the relationship. For example, it is expected that it is more accurately measure a vibration rectification error using polynomial approximation than in a case where a vibration rectification coefficient is obtained from a vibration rectification error for one amplitude by the above Expression (6). In addition, it is possible to obtain not only a vibration rectification coefficient (A) but also an asymmetry coefficient (B) as shown in the above Expression (7) by using polynomial approximation.

Further, in the present exemplary embodiment, as described above with reference to Fig. 9, vibration rectification coefficient information is information based on a coefficient of a second-order term in a polynomial expression obtained by performing polynomial approximation on a relationship between an input and an output of a non-linear system. The relationship between the input and the output of the non-linear system is a relationship between an input to the non-linear system and an output (response) of the non-linear system with respect to the input. For example, in the above-described acceleration sensor, a relationship between an input acceleration and a detected signal of the acceleration corresponds to a relationship between an input and an output of the non-linear system. Alternatively, in a signal generation system in which the frequency of an output signal is controlled by an input voltage, a relationship between the input voltage and the frequency of the output signal corresponds to a relationship between an input and an output of the non-linear system.

In this manner, it is possible to acquire a vibration rectification coefficient not only by a method using the above-described vibration but also by a method of acquiring a relationship between an input and an output while changing the input, performing polynomial approximation on the relationship, and obtaining a vibration rectification coefficient on the basis of a coefficient of a second-order term in the polynomial expression.

Meanwhile, according to the present exemplary embodiment, the correction of an asymmetry error is realized as follows. That is, the asymmetry coefficient information CB illustrated in Fig. 1 includes constant information regarding an asymmetry coefficient indicating a constant B of the asymmetry coefficient and frequency characteristic information regarding an asymmetry coefficient indicating a frequency characteristic $H_1(s)$ of the asymmetry coefficient. For example, the frequency characteristic information is a filter coefficient for realizing the frequency characteristic $H_1(s)$ in digital signal processing, and is a parameter (for example, a resistance value of resistance included in a filter, or a setting value for setting a capacitance value of a capacitor) for variably controlling a frequency characteristic of the filter in analog signal processing.

In this manner, it is possible to separate correction for the constant B and correction for the frequency characteristic $H_1(s)$ from each other. Specifically, as described in the above Expressions (15) and (16), it is possible to perform correction for a frequency characteristic of an asymmetry coefficient by performing the filtering of the frequency characteristic $H_1(s)$ on an output signal of the non-linear system 20, and to perform correction for a constant of the asymmetry coefficient by multiplying an output of the filtering by the constant B. Thereby, it is possible to reduce a load of the correction processing.

Further, in the present exemplary embodiment, constant information regarding an asymmetry coefficient is information which is acquired in advance for each sensor.

As described above, the asymmetry coefficient information includes information regarding the constant B and the frequency characteristic $H_1(s)$, but the constant B is different from each sensor (for example, for each individual sensor) . On the other hand, the frequency characteristic $H_1(s)$ is almost determined by a frequency characteristic of a detection circuit, and the frequency characteristic $H_1(s)$ may be made common when detection circuits are the same. From this, the constant information regarding the asymmetry coefficient information may be stored as information which is acquired in advance for each sensor. The frequency characteristic $H_1(s)$ may be information acquired in advance for each sensor, or may be made common regardless of the sensors. In a case where a frequency characteristic is made common, the frequency characteristic may be measured once, and only a constant may be measured by each sensor, so that it is possible to simplify the measurement of an asymmetry coefficient.

Further, in the present exemplary embodiment, the processing circuit 30 performs filtering of the frequency characteristic $H_1(s)$ of the asymmetry coefficient on an output signal of the non-linear system 20. The frequency characteristic information regarding the asymmetry coefficient is coefficient information regarding filtering for setting the frequency characteristic of the asymmetry coefficient as a frequency characteristic of filtering.

In this manner, it is possible to set a frequency characteristic of filtering on the basis of frequency characteristic information acquired in advance and to perform filtering having a frequency characteristic corresponding to a frequency characteristic $H_1(s)$ of an asymmetry error on an output signal of the non-linear system 20. As described above, correction for the frequency characteristic is performed through the filtering, and thus it is possible to reduce a load of the correction processing.

Further, in the present exemplary embodiment, the processing circuit 30 performs filtering of a frequency characteristic $H_1(s)$ of an asymmetry coefficient indicated by frequency characteristic information regarding the asymmetry coefficient on an output signal of the non-linear system 20, computes an absolute value on the signal after the filtering, obtains a correction value of an asymmetry error by multiplying the signal after the computation of the absolute value by a constant B of the asymmetry coefficient indicated by constant information regarding the asymmetry coefficient, and subtracts the obtained correction value from the output signal of the non-linear system 20.

By such computation, the correction computation as shown in the above Expression (16) is realized. That is, an asymmetry coefficient is calculated using a value obtained by multiplying an absolute value of a filter characteristic approximated to a frequency characteristic of the asymmetry coefficient, a coefficient in a filter frequency bandwidth, and an absolute value of the output signal by the output signal of the non-linear system 20, and the calculated asymmetry coefficient is subtracted from the output signal to realize correction. Meanwhile, similarly to a case of the vibration rectification error, a plurality of filter characteristics approximated to the frequency characteristic of the asymmetry coefficient may be used. In this case, the asymmetry coefficient is calculated by the sum of multiplied values obtained for respective filter characteristics.

Further, in the present exemplary embodiment, the asymmetry coefficient information is information based on a coefficient of a first-order term in a polynomial expression obtained by performing polynomial approximation on a relationship between an amplitude of an output signal of the non-linear system 20 and a signal in a low frequency bandwidth included in the output signal when a sinusoidal vibration is input to the non-linear system 20 as an input. Information based on a coefficient of a second-order term is, specifically, constant information (for example, B in the above Expression (16)) and frequency characteristic information (for example, $H_1(s)$ in the above Expression (16)) regarding an asymmetry coefficient.

In this manner, it is possible to accurately measure an asymmetry coefficient by acquiring a relationship between an amplitude and a signal in a low frequency bandwidth while changing the amplitude, and performing polynomial approximation on the relationship. For example, it is expected that it is more accurately measure an asymmetry coefficient using polynomial approximation than in a case where an asymmetry coefficient is obtained from an asymmetry error for one amplitude by the above Expression (6).

4. Detailed Configuration Example

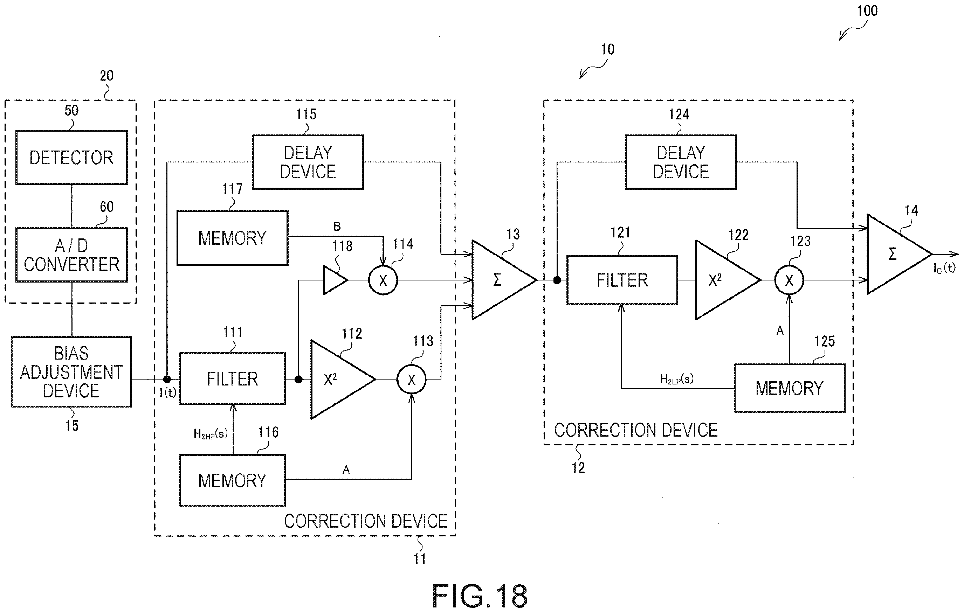

Fig. 18 illustrates a first detailed configuration example of the processing system 100. In Fig. 18, the non-linear system 20 includes a detector 50 (physical quantity sensor) and an A/D converter 60 (A/D conversion circuit) . In addition, the A/D converter 60 may be an arithmometer such as a counter. In addition, the processing apparatus 10 includes correction devices 11 and 12 (a correction unit, a correction circuit), adders 13 and 14 (an adding unit, an adding circuit), and a bias adjustment device 15 (a bias adjustment unit, a bias adjustment circuit).

The detector 50 detects a physical quantity, and outputs a signal corresponding to the detected physical quantity (a signal including information regarding the physical quantity). The A/D converter 60 performs A/D conversion on a signal received from the detector 50, and outputs a digital output signal (a signal indicating a physical quantity).

The bias adjustment device 15 removes an offset component (bias component) from the output signal of the A/D converter 60. For example, the bias adjustment device 15 is a high-pass filter, a subtractor (adder) of an offset component, or the like. Hereinafter, an output signal of the bias adjustment device 15 is assumed to be I(t).

The correction device 11 computes a vibration rectification error and an asymmetry error in a high-frequency bandwidth. The correction device 11 includes a filter 111, a square computing element 112, multipliers 113 and 114, a delay device 115, memories 116 and 117, and an absolute value circuit 118. The memory 116 stores information regarding a constant $A_{HP}$ and a frequency characteristic $H_{2HP}(S)$ of a vibration rectification coefficient. The information regarding the frequency characteristic $H_{2HP}(s)$ is a filter coefficient of a digital filter for realizing the frequency characteristic $H_{2HP}(s)$. A filter coefficient stored in the memory 116 is set in the filter 111, and the filter 111 performs high-pass filtering of the frequency characteristic $H_{2HP}(s)$ on I(t). The square computing element 112 squares an output signal of the filter 111. The multiplier 113 multiplies an output signal of the square computing element 112 by $-2A_{HP}$ on the basis of the constant $A_{HP}$ stored in the memory 116. The absolute value circuit 118 calculates an absolute value of the output signal of the filter 111. The multiplier 114 multiplies an output signal of the absolute value circuit 118 by -2B on the basis of a constant B stored in the memory 117. The delay device 115 delays I(t) by a predetermined period of time. The delay time is matched to computation times in the filter 111, the square computing element 112, and the multipliers 113 and 114. Meanwhile, the absolute value circuit 118 may be omitted, and the function of the absolute value circuit 118 may be executed by the multiplier 114. That is, in a case where the multiplier 114 multiplies the output signal of the filter 111 by -2B in a case where the polarity sign of the output signal of the filter 111 is positive, and multiplies the output signal of the filter 111 by 2B (=-1×-2B) in a case where the polarity sign of the output signal of the filter 111 is negative.

The adder 13 adds up the output signal of the multiplier 113, the output signal of the multiplier 114, and the output signal of the delay device 115.

The correction device 12 computes a vibration rectification error in a low frequency bandwidth. The correction device 12 includes a filter 121, a square computing element 122, a multiplier 123, a delay device 124, and a memory 125. The memory 125 stores information regarding a constant $A_{LP}$ and a frequency characteristic $H_{2LP}(s)$ of a vibration rectification coefficient. The information regarding the frequency characteristic $H_{2LP}(s)$ is a filter coefficient of a digital filter for realizing the frequency characteristic $H_{2LP}(s)$. A filter coefficient stored in the memory 125 is set in the filter 121, and the filter 121 performs low-pass filtering of the frequency characteristic $H_{2LP}(s)$ on an output signal of the adder 13. The square computing element 122 squares an output signal of the filter 121. The multiplier 123 multiplies the output signal of the square computing element 122 by $-2A_{LP}$ on the basis of the constant $A_{LP}$ stored in the memory 125. The delay device 124 delays the output signal of the adder 13 by a predetermined period of time. The delay time is matched to computation times in the filter 121, the square computing element 122, and the multiplier 123.

The adder 14 adds up the output signal of the multiplier 123 and the output signal of the delay device 124, and outputs $I_C(t)$ which is an output signal after correction. By the above computation, $I_C(t)$ in the following Expression (22) is obtained. Here, a frequency characteristic of an asymmetry coefficient is assumed to be $H_1(s)=H_{2HP}(s)$.

$$I_C(t) = I(t) - 2 \times \left\{ A_{LP} \times \left( H_{2LP}(s) \times I(t) \right)^2 + A_{HP} \times \left( H_{2HP}(s) \times I(t) \right)^2 + B \times \left| H_{2HP}(s) \times I(t) \right| \right\}$$

$$(2\,2)$$

The correction devices 11 and 12, the adders 13 and 14, and the bias adjustment device 15 may be constituted by individual pieces of hardware (logic circuits), or may be realized through processing using a processor such as a CPU. In a case where these devices are realized through the processing using a processor, a program having the operations of the correction devices 11 and 12, the adders 13 and 14, and the bias adjustment device 15 described therein is stored in a memory, and the processor loads and executes the program, so that the operations of the correction devices 11 and 12, the adders 13 and 14, and the bias adjustment device 15 are realized as processes.

The memories 116, 117, and 125 correspond to the storage unit 40 of Fig. 1. The memories 116, 117, and 125 may be configured as one memory, or may be configured as individual memories.

Meanwhile, the configuration of the processing apparatus 10 is not limited to Fig. 18, and a configuration based on a computation expression of correction may be adopted. For example, in a case where a frequency characteristic of a vibration rectification coefficient is approximated using three filters as illustrated in Fig. 17, three correction devices and three adders may be provided in response to the three filters. Alternatively, in a case where a vibration rectification coefficient and an asymmetry coefficient differ in a frequency characteristic, correction devices corresponding to filters approximating the respective frequency characteristics may be provided.

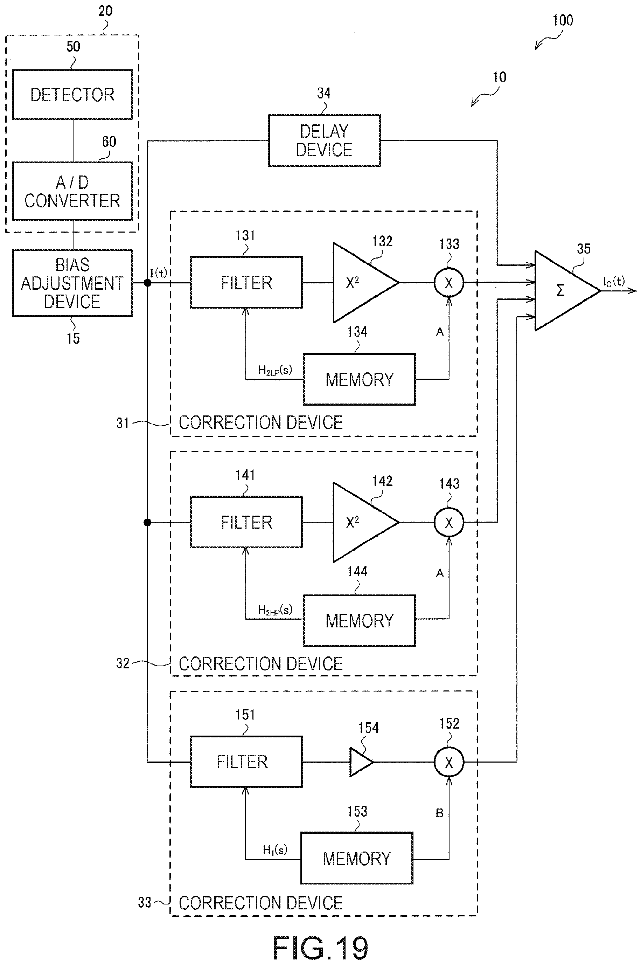

Fig. 19 illustrates a second detailed configuration example of the processing system 100. In Fig. 19, the processing apparatus 10 includes correction devices 31, 32, and 33 (correction units, correction circuits), a delay device 34, an adder 35 (an adding unit, an adding circuit), and a bias adjustment device 15 (a bias adjustment unit, a bias adjustment circuit). Meanwhile, the same components as the components described already are denoted by the same reference numerals and signs, and a description of the components will be appropriately omitted.

The correction device 31 computes a vibration rectification error in a low frequency bandwidth. The correction device 31 includes a filter 131, a square computing element 132, a multiplier 133, and a memory 134. A filter coefficient stored in the memory 134 is set in the filter 131, and the filter 131 performs low-pass filtering of a frequency characteristic $H_{2LP}(s)$ on I(t). The square computing element 132 squares an output signal of the filter 131. The multiplier 133 multiplies an output signal of the square computing element 132 by $-2A_{LP}$ on the basis of a constant $A_{LP}$ stored in the memory 134.

The correction device 32 computes a vibration rectification error in a high-frequency bandwidth. The correction device 32 includes a filter 141, a square computing element 142, a multiplier 143, and a memory 144. A filter coefficient stored in the memory 144 is set in the filter 141, and the filter 141 performs high-pass filtering of a frequency characteristic $H_{2HP}(s)$ on I(t). The square computing element 142 squares an output signal of the filter 141. The multiplier 143 multiplies an output signal of the square computing element 142 by $-2A_{HP}$ on the basis of a constant $A_{HP}$ stored in the memory 144.

The correction device 33 computes an asymmetry error. The correction device 51 includes a filter 151, a multiplier 152, a memory 153, and an absolute value circuit 154. A filter coefficient stored in the memory 153 is set in the filter 151, and the filter 151 performs filtering of a frequency characteristic $H_1(s)$ on I(t). The absolute value circuit 154 calculates an absolute value of an output signal of the filter 151. Specifically, conditional branching is performed depending on the polarity sign of the output signal of the filter 151, and an absolute value is obtained by multiplying the output signal of the filter 151 by -1 in a case of negative polarity. The multiplier 152 multiplies an output signal of the absolute value circuit 154 by -2B on the basis of a constant B stored in the memory 153.

The delay device 34 delays I(t) by a predetermined period of time. The delay time is matched to computation times in the correction devices 31, 32, and 33.

The adder 35 adds up output signals of the multipliers 133, 143, and 152 and an output signal of the delay device 34, and outputs $I_C(t)$ which is an output signal after correction.

Meanwhile, the configuration of the processing apparatus 10 is not limited to Fig. 19, and a configuration based on a computation expression of correction may be adopted. For example, in a case where a frequency characteristic of a vibration rectification coefficient is approximated using three filters as illustrated in Fig. 17, three correction devices corresponding to the three filters and a correction device computing an asymmetry error may be provided. Alternatively, in a case where frequency characteristics of a vibration rectification coefficient and an asymmetry coefficient are regarded as being the same, a correction device obtaining a vibration rectification error and a correction device obtaining an asymmetry error may be made common.

In addition, the correction devices 31, 32, and 33, the delay device 34, the adder 35, and the bias adjustment device 15 may be constituted by individual pieces of hardware (logic circuits), or may be realized through processing using a processor such as a CPU. In a case where these devices are realized through the processing using a processor, a program having the operations of the correction devices 31, 32, and 33, the delay device 34, the adder 35, and the bias adjustment device 15 described therein is stored in a memory, and the processor loads and executes the program, so that the operations of the correction devices 31, 32, and 33, the delay device 34, the adder 35, and the bias adjustment device 15 are realized as processes.

Further, in a case where I(t) to be input to the processing apparatus 10 is an analog signal, the processing apparatus 10 illustrated in Figs. 18 and 19 may be realized by an analog circuit. That is, the filter, the square computing element, the multiplier, the absolute value circuit, and the adder may be constituted by an analog circuit that performs the same computation.

5. Example of Non-linear System

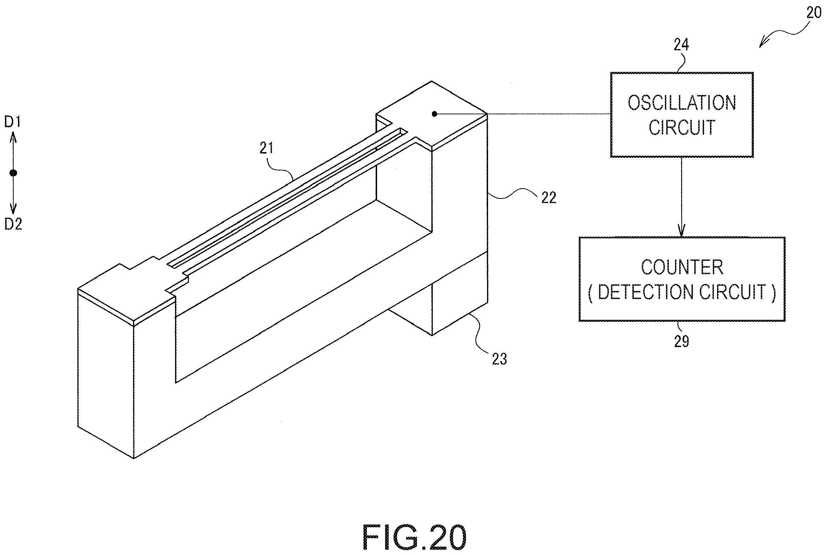

Fig. 20 illustrates a first detailed configuration example of the non-linear system 20. Fig. 20 illustrates an example of an acceleration sensor. The acceleration sensor (non-linear system 20) includes a tuning fork type quartz vibrator 21, a beam portion 22, a fixed portion 23, an oscillation circuit 24, and a counter 29 (detection circuit) .

One end of the tuning fork type quartz vibrator 21 is fixed to one end of the beam portion 22, and the other end thereof is fixed to the other end of the beam portion 22. The fixed portion 23 is fixed to, for example, a substrate or a package of an acceleration sensor module, and one end of the beam portion 22 is fixed to the fixed portion 23. The tuning fork type quartz vibrator 21 is driven by the oscillation circuit 24, and oscillates (vibrates) at a specific oscillation frequency of the tuning fork type quartz vibrator 21.

When an external force acts on the acceleration sensor, an apparatus having the acceleration sensor built-in, or the like, an inertial force is applied to the other end of the beam portion 22, and the beam portion 22 is deformed (bent) with one end side of the beam portion 22 as a fixed end. In a case where an acceleration is generated in a direction D1, an inertial force is generated in a direction D2, and a tensile force of the tuning fork type quartz vibrator 21 increases due to the deformation of the beam portion 22. In this case, a change occurs in a direction in which an oscillation frequency increases. On the other hand, in a case where an acceleration is generated in a direction D2, an inertial force is generated in the direction D1, and a tensile force of the tuning fork type quartz vibrator 21 decreases due to the deformation of the beam portion 22. In this case, a change occurs in a direction in which an oscillation frequency decreases. The counter 29 performs a counting operation in accordance with an oscillation signal of the oscillation circuit 24. A counted value is increased when the oscillation frequency increases, and is reduced when the oscillation frequency decreases. This counted value is output as a result of the detection of an acceleration. The bias adjustment device 15 described above performs bias adjustment by subtracting, for example, a reference counted value (a counted value corresponding to an oscillation frequency when an acceleration is zero) from the counted value to be output by the counter.

In a case where at least one of the tuning fork type quartz vibrator 21, the oscillation circuit 24, and the counter 29 has non-linearity, an output signal of the acceleration sensor has non-linearity with respect to an input acceleration. In the present exemplary embodiment, it is possible to reduce at least one of a vibration rectification error and an asymmetry error due to such non-linearity by performing the correction of a feedforward.

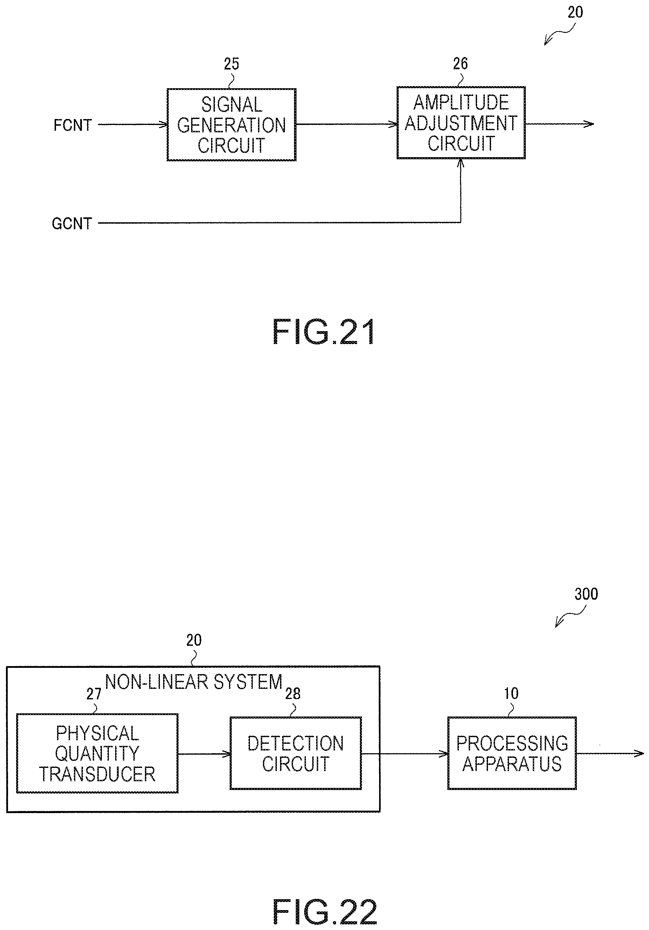

Fig. 21 illustrates a second detailed configuration example of the non-linear system 20. Fig. 21 illustrates an example of an alternating current signal generation circuit. The alternating current signal generation circuit (non-linear system 20) includes a signal generation circuit 25 and an amplitude adjustment circuit 26.

The signal generation circuit 25 generates an alternating current signal of a frequency set by a setting signal FCNT. For example, the signal generation circuit is an oscillation circuit of which the oscillation frequency is variably controlled by the setting signal FCNT. The amplitude adjustment circuit 26 adjusts an amplitude of the alternating current signal received from the signal generation circuit 25 to an amplitude set by a setting signal GCNT. For example, the amplitude adjustment circuit is an amplifier of which the gain is variably controlled by the setting signal GCNT.

In a case where at least one of the signal generation circuit 25 and the amplitude adjustment circuit 26 has non-linearity, an output signal of the alternating current signal generation circuit has non-linearity with respect to an input. In this case, the input can be considered to be an ideal sine wave signal of the frequency and the amplitude set by the setting signals FCNT and GCNT. When an output signal has a distortion (non-linearity) with respect to the ideal sine wave signal, at least one of a vibration rectification error and an asymmetry error occurs. In the present exemplary embodiment, the correction of a feedforward is performed, and thus it is not necessary to perform feedback control on the non-linear system 20. For this reason, an object of the correction is not limited, and the processing apparatus 10 according to the present exemplary embodiment can be applied to various types of non-linear systems 20 including an alternating current signal generation circuit and the like.

6. Physical Quantity Measurement Apparatus

Fig. 22 illustrates a configuration example of a physical quantity measurement apparatus 300 including the processing apparatus 10 according to the present exemplary embodiment. The physical quantity measurement apparatus 300 includes the non-linear system 20 and the processing apparatus 10. The non-linear system 20 (physical quantity sensor) includes a physical quantity transducer 27 and a detection circuit 28.

The physical quantity transducer 27 detects a physical quantity, and outputs a detected signal including information regarding the detected physical quantity. For example, the physical quantity transducer is a detection element (a quartz crystal vibrator, a MEMS vibrator, or the like) of an acceleration sensor, a detection element (a quartz crystal vibrator, a MEMS vibrator, or the like) of a gyro sensor, a detection element of a temperature sensor, a detection element of a pressure sensor, a detection element of an optical sensor, or the like. The detection circuit 28 extracts a physical quantity from the detected signal received from the physical quantity transducer 27, and outputs a signal corresponding to the extracted physical quantity. For example, the detection circuit 28 may include an amplifier, a rectifier, a filter, an A/D converter, or the like. The processing apparatus 10 performs correction for reducing at least one of a vibration rectification error and an asymmetry error from the output signal received from the detection circuit 28. In this manner, a signal having a linear relationship with respect to the physical quantity input to the physical quantity transducer 27 is obtained.

For example, the physical quantity sensor (non-linear system 20) and the processing apparatus 10 may be modularized, and the physical quantity measurement apparatus 300 may be configured as an integrated module. Alternatively, the physical quantity sensor and the processing apparatus 10 may be configured as separate bodies and connected to each other through a cable or the like. Although a case where one physical quantity sensor is provided has been described in Fig. 22, the physical quantity measurement apparatus 300 may include a plurality of physical quantity sensors. In this case, a vibration rectification coefficient and an asymmetry coefficient are measured in advance for each of the physical quantity sensors. These coefficients are stored in the storage unit 40, and the processing circuit 30 reads out a coefficient corresponding to the physical quantity sensor performing correction processing from the storage unit 40 and performs the correction processing.

While this embodiment has been described in detail, one skilled in the art can easily understand that a number of modifications can be made without substantially departing from the new matters and effects of the invention. Therefore, all such modifications are included in the scope of the invention. For example, a term described at least once along with a different term having a broader meaning or the same meaning in the description or drawings can be replaced with the different term at any location in the description or drawings. In addition, all combinations of the present exemplary embodiment and modification examples are also included in the scope of the invention. In addition, configurations, operations, and the like of a non-linear system, a processing apparatus, a processing system, and a physical quantity measurement apparatus are not limited to those described in the present exemplary embodiment, and various modifications can be made.

**Claims**

1. A processing apparatus comprising:

a processing circuit that performs processing on an output signal of a non-linear system that outputs the output signal including a vibration rectification error with respect to an input; and
a storage unit that stores vibration rectification coefficient information regarding the vibration rectification error acquired in advance,

wherein the processing circuit performs correction for reducing the vibration rectification error included in the output signal on the basis of the output signal and the vibration rectification coefficient information.

2. The processing apparatus according to claim 1,
   wherein the vibration rectification coefficient information includes constant information regarding a vibration rectification coefficient indicating a constant of the vibration rectification coefficient, and frequency characteristic information regarding the vibration rectification coefficient indicating a frequency characteristic of the vibration rectification coefficient.

3. The processing apparatus according to claim 2,
   wherein the non-linear system includes a sensor and outputs a detected signal of the sensor or a signal based on the detected signal as the output signal, and
   the constant information regarding the vibration rectification coefficient is information acquired in advance for each sensor.

4. The processing apparatus according to claim 3,
   wherein the processing circuit performs filtering of the frequency characteristic of the vibration rectification coefficient on the output signal, and
   the frequency characteristic information regarding the vibration rectification coefficient is coefficient information regarding the filtering for setting the frequency characteristic of the vibration rectification coefficient as a frequency characteristic of the filtering.

5. The processing apparatus according to claim 3,
   wherein the processing circuit performs filtering of the frequency characteristic of the vibration rectification coefficient indicated by the frequency characteristic information regarding the vibration rectification coefficient on the output signal,
   performs square computation on a signal after the filtering,
   obtains a correction value of the vibration rectification error by multiplying a signal after the square computation by a constant of the vibration rectification coefficient indicated by the constant information regarding the vibration rectification coefficient, and
   subtracts the obtained correction value from the output signal.

6. The processing apparatus according to claim 4,
   wherein the vibration rectification coefficient information is information based on a coefficient of a second-order term in a polynomial expression obtained by performing polynomial approximation on a relationship between an amplitude of the output signal of the non-linear system and a signal in a low frequency bandwidth included in the output signal, when a sinusoidal vibration is input to the non-linear system as the input.

7. The processing apparatus according to claim 4,
   wherein the vibration rectification coefficient information is information based on a coefficient of a second-order term in a polynomial expression obtained by performing polynomial approximation on a relationship between an input and an output of the non-linear system.

8. The processing apparatus according to claim 1,
   wherein the output signal of the non-linear system includes an asymmetry error with respect to the input,
   the storage unit stores asymmetry coefficient information regarding the asymmetry error acquired in advance, and
   the processing circuit performs correction for reducing the asymmetry error included in the output signal on the basis of the asymmetry coefficient information.

9. A processing apparatus comprising:

   a processing circuit that performs processing on an output signal of a non-linear system that outputs the output signal including an asymmetry error with respect to an input; and
   a storage unit that stores asymmetry coefficient information regarding the asymmetry error acquired in advance,
   wherein the processing circuit performs correction for reducing the asymmetry error included in the output signal on the basis of the output signal and the asymmetry coefficient information.

10. The processing apparatus according to claim 9,

wherein the asymmetry coefficient information includes constant information regarding an asymmetry coefficient indicating a constant of the asymmetry coefficient, and frequency characteristic information regarding the asymmetry coefficient indicating a frequency characteristic of the asymmetry coefficient.

11. The processing apparatus according to claim 10,
wherein the non-linear system includes a sensor and outputs a detected signal of the sensor or a signal based on the detected signal as the output signal, and
the constant information regarding the asymmetry coefficient is information acquired in advance for each sensor.

12. The processing apparatus according to claim 10,
wherein the processing circuit performs filtering of the frequency characteristic of the asymmetry coefficient on the output signal, and
the frequency characteristic information regarding the asymmetry coefficient is coefficient information regarding the filtering for setting the frequency characteristic of the asymmetry coefficient as a frequency characteristic of the filtering.

13. The processing apparatus according to claim 10,
wherein the processing circuit performs filtering of the frequency characteristic of the asymmetry coefficient indicated by the frequency characteristic information regarding the asymmetry coefficient on the output signal,
computes an absolute value on a signal after the filtering,
obtains a correction value of the asymmetry error by multiplying a signal after computing the absolute value by a constant of the asymmetry coefficient indicated by the constant information regarding the asymmetry coefficient, and
subtracts the obtained correction value from the output signal.

14. The processing apparatus according to claim 9,
wherein the asymmetry coefficient information is information based on a coefficient of a first-order term in a polynomial expression obtained by performing polynomial approximation on a relationship between an amplitude of the output signal of the non-linear system and a signal in a low frequency bandwidth included in the output signal, when a sinusoidal vibration is input to the non-linear system as the input.

15. A processing system comprising:

   the processing apparatus according to claim 1 or the processing apparatus according to claim 9; and
   the non-linear system.

16. A physical quantity measurement apparatus comprising:

   the processing apparatus according to claim 1 or the processing apparatus according to claim 9; and
   the non-linear system including a physical quantity transducer.

17. A measurement method comprising:

   inputting vibration to a non-linear system that outputs an output signal including a vibration rectification error with respect to an input;
   acquiring an amplitude and a signal in a low frequency bandwidth which are included in the output signal of the non-linear system; and
   acquiring vibration rectification coefficient information on the basis of a coefficient of a second-order term in a polynomial expression obtained by performing polynomial approximation on a relationship between the amplitude and the signal in a low frequency bandwidth.

18. A measurement method comprising:

   inputting vibration to a non-linear system that outputs an output signal including an asymmetry error with respect to an input;
   acquiring an amplitude and a signal in a low frequency bandwidth which are included in the output signal of the non-linear system; and
   acquiring asymmetry coefficient information on the basis of information indicating a coefficient of a first-order term in a polynomial expression obtained by performing polynomial approximation on a relationship between the amplitude and the signal in a low frequency bandwidth.

100

20

IN ——→ | NON-LINEAR SYSTEM | —— $I(t)$ ——→ | PROCESSING CIRCUIT | ——→ $I_C(t)$

30

CA, CB

40

| STORAGE UNIT |

PROCESSING APPARATUS

10

FIG. 1

FIG. 2

FREQUENCY (LOGARITHM)

AMPLITUDE (LOGARITHM)

SP1

SP2

SP3

200

| 260 | | 250 | | 240 | |
|-----|---|-----|---|-----|---|
| PC | | INTERFACE CONVERTER | | ACCEL-ERATION SENSOR | |

230

| SIGNAL GENERATOR | | AMPLIFIER | | EXCITER |
|------------------|---|-----------|---|---------|

210        220

SUBSTRATE

270

VIBRATION

# FIG. 3

FIG. 4

FIG. 5

EP 3 483 561 A1

FIG. 6

FIG. 7

EP 3 483 561 A1

AMPLITUDE

FIG. 8

SIGNAL IN LOW FREQUENCY BANDWIDTH

0

OUTPUT

INPUT

0

FIG. 9

OUTPUT

INPUT

0

FIG.10

```
          ┌─────────────┐
          │    START    │
          └──────┬──────┘
                 │
                 ▼
        ┌──────────────────┐
        │ APPLY VIBRATION TO│  ~S1
        │ MEASURE RESPONSE │
        └────────┬─────────┘
                 │
                 ▼
        ┌──────────────────┐
        │  REMOVE OFFSET   │  ~S2
        │   OF RESPONSE    │
        └────────┬─────────┘
                 │
         ┌───────┴────────────────────────┐
         ▼                                ▼
  ┌──────────────┐              ┌──────────────────┐
  │  CALCULATE   │ ~S3          │  EXTRACT SIGNAL  │ ~S6
  │ ABSOLUTE VALUE│             │ IN LOW FREQUENCY │
  └──────┬───────┘              │ BANDWIDTH BY LPF │
         │                      └────────┬─────────┘
         ▼                               │
  ┌──────────────────┐                   │
  │  EXTRACT SIGNAL IN│ ~S4              │
  │  LOW FREQUENCY    │                  │
  │ BANDWIDTH BY LPF  │                  │
  │ TO OBTAIN AMPLITUDE│                 │
  └──────┬───────────┘                   │
         ▼                               │
  ┌──────────────────┐                   │
  │PERFORM MULTIPLICATION│ ~S5           │
  │  BY PEAK-TO-RMS  │                   │
  └──────┬───────────┘                   │
         └───────────┬───────────────────┘
                     ▼
        ┌──────────────────────────┐
        │  APPROXIMATE CORRELATION  │ ~S7
        │ BETWEEN ENVELOPE AMPLITUDE│
        │   AND VRE BY SECOND-ORDER │
        │   POLYNOMIAL EXPRESSION   │
        └────────────┬─────────────┘
                     ▼
        ┌──────────────────────────────┐
        │SET COEFFICIENT OF SECOND-ORDER TERM│ ~S8
        │ TO BE VRC AND SET COEFFICIENT OF   │
        │   FIRST-ORDER TERM TO BE           │
        │    ASYMMETRY COEFFICIENT           │
        └────────────┬─────────────┘
                     ▼
              ┌─────────────┐
              │     END     │
              └─────────────┘
```

FIG.11

FIG.12

FIG.13

FIG.14

FIG.15

FIG.16

FREQUENCY

VRC

f1

0

EP 3 483 561 A1

FIG.17

FIG.18

EP 3 483 561 A1

FIG.19

FIG.20

EP 3 483 561 A1

20

25

FCNT ——→ SIGNAL GENERATION CIRCUIT ——→ 26 AMPLITUDE ADJUSTMENT CIRCUIT ——→

GCNT ——————————————————————→

## FIG.21

300

20

27 NON-LINEAR SYSTEM 28

PHYSICAL QUANTITY TRANSDUCER ——→ DETECTION CIRCUIT ——→ 10 PROCESSING APPARATUS ——→

## FIG.22

Europäisches
Patentamt

European
Patent Office

Office européen
des brevets

**EUROPEAN SEARCH REPORT**

Application Number

EP 18 20 5146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 930 691 A2 (HONEYWELL INT INC [US]) 11 June 2008 (2008-06-11) * abstract * * paragraphs [0007], [0009] * * paragraphs [0014] - [0017], [0020]; figure 1 * * paragraph [0025] - paragraph [0031]; figure 3 * * paragraph [0032] - paragraph [0034]; figure 4 * | 1-18 | INV. G01D3/02 G01D18/00 ADD. G01C25/00 G01P21/00 |
| X A | US 2016/223357 A1 (FREY JR ROBERT D [US]) 4 August 2016 (2016-08-04) * abstract * * paragraph [0016] - paragraph [0021]; figure 1 * * paragraph [0030] - paragraph [0031]; figure 4 * | 1,4, 15-17 9,18 | |
| X A | US 7 298 570 B1 (HAN KE [US]) 20 November 2007 (2007-11-20) * abstract * * column 1, line 12 - line 36 * * column 2, line 51 - column 3, line 13; figure 1 * * column 4, line 3 - line 7; figure 3 * | 9 1 | TECHNICAL FIELDS SEARCHED (IPC) G01D G01P G01C G11B |
| X | US 6 141 167 A (NISHIDA YASUTAKA [JP] ET AL) 31 October 2000 (2000-10-31) * abstract * * column 5, line 9 - line 39; figure 3 * | 9 | |

The present search report has been drawn up for all claims

| Place of search | Date of completion of the search | Examiner |
|---|---|---|
| Munich | 8 March 2019 | Jakob, Clemens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 20 5146

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2019

| Patent document cited in search report | | Publication date | Patent family member(s) | | Publication date |
|---|---|---|---|---|---|
| EP 1930691 | A2 | 11-06-2008 | EP 1930691 | A2 | 11-06-2008 |
| | | | JP 2008122380 | A | 29-05-2008 |
| | | | US 2008105050 | A1 | 08-05-2008 |
| US 2016223357 | A1 | 04-08-2016 | NONE | | |
| US 7298570 | B1 | 20-11-2007 | US 7298570 | B1 | 20-11-2007 |
| | | | US 7548389 | B1 | 16-06-2009 |
| | | | US 7885031 | B1 | 08-02-2011 |
| | | | US 8094400 | B1 | 10-01-2012 |
| | | | US 8331054 | B1 | 11-12-2012 |
| US 6141167 | A | 31-10-2000 | JP H10143805 | A | 29-05-1998 |
| | | | SG 65698 | A1 | 22-06-1999 |
| | | | US 6141167 | A | 31-10-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008514959 T